(19) Europäisches Patentamt
European Patent Office
Office européen des brevets

(11) **EP 3 904 205 A1**

(12) **EUROPEAN PATENT APPLICATION**

(43) Date of publication:
03.11.2021 Bulletin 2021/44

(21) Application number: 21181338.1

(22) Date of filing: 14.07.2016

(51) Int Cl.:
*B64C 27/12* (2006.01)        *B64C 13/04* (2006.01)
*B64C 27/56* (2006.01)        *H02P 6/182* (2016.01)
*H02P 27/08* (2006.01)        *H02P 21/00* (2016.01)
*H02P 23/00* (2016.01)        *H02P 6/28* (2016.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(62) Document number(s) of the earlier application(s) in
accordance with Art. 76 EPC:
**16908458.9 / 3 371 048**

(71) Applicant: **SZ DJI Technology Co., Ltd.**
**Shenzhen, Guangdong 518057 (CN)**

(72) Inventors:
• **LIU, Wanqi**
**Shenzhen (CN)**

• **LAN, Qiu**
**Shenzhen (CN)**
• **ZHOU, Changxing**
**Shenzhen (CN)**

(74) Representative: **Goddar, Heinz J.**
**Boehmert & Boehmert**
**Anwaltspartnerschaft mbB**
**Pettenkoferstrasse 22**
**80336 München (DE)**

Remarks:
This application was filed on 24.06.2021 as a
divisional application to the application mentioned
under INID code 62.

(54) **A METHOD FOR CONTROLLING A MOTOR AND A SYSTEM**

(57)    A method for controlling a motor is provided. The method comprises: operating the motor to generate an electrical signal; and outputting the electrical signal from the motor to one or more processors, wherein the electrical signal is configured to be used by the one or more processors as an input for selecting a motor control parameter from a plurality of different motor control parameters. A corresponding system for controlling a motor is also provided.

FIG. 1

EP 3 904 205 A1

**Description**

**BACKGROUND**

Unmanned vehicles such as unmanned aerial vehicles (UAVs) can be used to perform surveillance, reconnaissance, and exploration tasks for a wide variety of military and civilian applications. A UAV can include one or more functional modules for controlling the operation of UAV components such as propulsion units. For example, an electronic speed control (ESC) module can generate control signals for controlling a motor in a propulsion unit. In some instances, one or more motor control parameters of an ESC module can be adjusted using, for example a computing device or an ESC programming card.

**SUMMARY**

The present disclosure provides systems, methods, and devices for programming a motor controller. The motor controller can be used to control a motor in a propulsion system on a vehicle (such as a UAV). The motor controller can be programmed out-field or on-site, without requiring the use of additional accessories such as a computing device or dedicated motor controller programming card.

According to various aspects of the invention, a motor can be connected to a motor controller, and used as an input device for selecting and/or adjusting one or more control parameters of the motor controller. The same motor, or another different motor, can be subsequently controlled by the motor controller based on the one or more selected and/or adjusted control parameters. In a multi-rotor aerial vehicle such as a UAV, a motor of a propulsion unit is usually located on an open end of each arm of the UAV, and can be easily accessed by a user without requiring the UAV housing to be taken apart. Accordingly, the ease and convenience of programming the motor controller can be significantly improved using various embodiments of the invention.

In some aspects of the invention, a method for operating a motor controller is provided. The method may comprise: obtaining an electrical signal via a port on the motor controller, wherein said port is configured to be electrically connected to a motor; and selecting a motor control parameter from a plurality of different motor control parameters based on the electrical signal, wherein the motor controller is configured to control the motor based on the selected motor control parameter.

A system for controlling a motor is provided in accordance with another aspect of the invention. The system may comprise: a motor controller comprising one or more processors that are individually or collectively configured to: obtain an electrical signal via a port on the motor controller, wherein said port is configured to be electrically connected to a motor; and select a motor control parameter from a plurality of different motor control parameters based on the electrical signal, wherein the motor controller is configured to control the motor based on the selected motor control parameter.

Further aspects of the invention may be directed to a non-transitory computer-readable medium storing instructions that, when executed, causes one or more processors to perform a method for operating a motor controller. The method may comprise: obtaining an electrical signal via a port on the motor controller, wherein said port is configured to be electrically connected to a motor; and selecting a motor control parameter from a plurality of different motor control parameters based on the electrical signal, wherein the motor controller is configured to control the motor based on the selected motor control parameter.

In some embodiments, the electrical signal may be indicative of a counter electromotive force (EMF) generated by a user input to the motor. The user input may comprise a manual rotation of the motor to generate the counter EMF. The counter EMF can be generated without the motor being powered on. Alternatively, the counter EMF can be generated with the motor being powered on. The motor can be powered on by an electric current provided from the motor controller.

In some embodiments, the electrical signal may be generated at a phase end of the motor, and output from the phase end to the port of the motor controller. The electrical signal may comprise a plurality of signal waveforms having an amplitude, a frequency, and a phase difference. The plurality of signal waveforms may be generated at a plurality of phase ends of the motor, and output from the plurality of phase ends to the port of the motor controller. The plurality of signal waveforms may be indicative of a counter electromotive force (EMF) generated by a user input to the motor. The amplitude and the frequency of the plurality of signal waveforms may be indicative of a speed of rotation of the motor when the motor is being manually rotated. The phase difference may be indicative of a direction of rotation of the motor when the motor is being manually rotated. Additionally, the phase difference may be indicative of an angle of rotation of the motor.

In some embodiments, the method may further comprise: detecting a variation in the plurality of signal waveforms when the motor is being manually rotated. The variation in the plurality of signal waveforms may comprise (i) a change in the amplitude, (ii) a change in the frequency, and/or (iii) a change in the phase difference of the plurality of signal waveforms.

In some embodiments, the electrical signal may be indicative of a change in a reference electric current provided to the motor. The reference electric current may be a constant electric current that is provided from the motor controller. The motor may not be configured to actively rotate when the reference electric current is provided to the motor. The motor may be in a locked state when the reference electric current is provided to the motor. The reference electric current may be configured to generate a torque in the motor for effecting the locked state of the motor. The motor may be only rotatable by an external force when the motor is in the locked state. The external force may be provided by a user's manual rotation of the motor. The change in the reference electric current may be caused by a counter electromotive force (EMF) that is generated by a user input to the motor. The user input may comprise manual rotation of the motor to generate the counter EMF. The change in the reference electric current may be associated with (i) a degree of rotation and/or (ii) number of turns of the motor. An angle of rotation of the rotor can be determined from a phase change in the reference electric current.

In some embodiments, the plurality of different motor control parameters may comprise instructions for controlling a (i) a direction of rotation, (ii) a rotation timing, (iii) an acceleration, (iv) a deceleration of the motor, (v) a normal phase-change timing, (vi) an advanced phase-change timing, and/or (vii) a voluntary deceleration of the motor. The selected motor control parameter may comprise instructions for controlling any one of (i)-(vii). The direction of rotation may comprise a clockwise direction or a counterclockwise direction of rotation. The rotation timing, acceleration, and deceleration may respectively comprise one or more rotation timings, one or more acceleration settings, and one or more deceleration settings associated with one or more operational modes. The one or more operational modes may comprise a normal mode and an advanced mode. The advanced mode may provide a higher acceleration force, a higher deceleration force (braking power), and/or a faster rotation timing compared to the normal mode.

In some embodiments, the plurality of different motor control parameters may be associated with and selected using a plurality of different user inputs. The plurality of different user inputs may comprise a user's manual rotation of the motor (1) in different directions and/or (2) for different number of turns. In some instances, a first user input may be used to select a first motor control parameter, and a second user input may be used to select a second motor control parameter. The first user input and the second user input may be different, and the first motor control parameter and the second motor control parameter may be different.

In some embodiments, the plurality of different motor control parameters may be associated with a plurality of different predefined electrical signals. The plurality of different predefined electrical signals may be associated with a plurality of predefined user inputs to the motor. The plurality of predefined user inputs may comprise (i) a speed of rotation, (ii) a direction of rotation, (iii) a rotation sequence, (iv) a number of rotation turns, and/or (v) a rotational position of the motor. In some instances, the plurality of different motor control parameters and the plurality of predefined user inputs may be provided in a look-up table.

In some embodiments, the method may further comprise: (1) comparing the electrical signal to the plurality of different predefined electrical signals, and (2) selecting the motor control parameter from the plurality of different motor control parameters when the electrical signal matches a predefined electrical signal that is associated with the selected motor control parameter.

In some embodiments, selecting the motor control parameter may further comprise: activating a mode that allows a value of the motor control parameter to be adjusted. The method may further comprise: adjusting the selected motor control parameter to a desired value after the motor control parameter is selected from the plurality of different motor control parameters. Adjusting the selected motor control parameter to the desired value may comprise calculating the desired value based on (i) a maximum value of the selected motor control parameter, (ii) a maximum output value of the motor, and (iii) a present output value of the motor. The maximum output value and the present output value of the motor may be associated with a speed, acceleration, rotating timing, and/or torque of the motor. The present output value of the motor may be obtained from the electrical signal. A ratio of the desired value to the maximum value of the selected motor control parameter may be proportional to a ratio of the present output value to the maximum output value of the motor.

In some embodiments, the method may further comprise: providing a driving signal for driving the motor to generate an audio signal when the motor control parameter is selected from the plurality of different motor control parameters. The audio signal may be generated at a predetermined audio frequency and/or for a predetermined length of time. The audio signal may comprise a predetermined sequence of sounds spaced apart at a same or different time intervals.

In some embodiments, the method may further comprise: providing a driving signal for driving a set of visual indicators to generate a visual signal when the motor control parameter is selected from the plurality of different motor control parameters. The set of visual indicators may comprise a plurality of lighting elements. The visual signal may be generated at a predetermined frequency and/or for a predetermined length of time. The visual signal may comprise a predetermined sequence of light flashes spaced apart at a same or different time intervals.

In some embodiments, the method may further comprise: providing a driving signal for driving the motor to generate a vibration signal when the motor control parameter is selected from the plurality of different motor control parameters. The vibration signal may be indicative that the motor control parameter is successfully selected. The motor may be configured to vibrate at a predefined frequency and/or for a predetermined length of time. The motor may be configured to vibrate in a predefined sequence of vibrations spaced apart at a same or different time intervals.

In some embodiments, the method may further comprise: providing a driving signal for driving the motor to generate a rotation signal when the motor control parameter is selected from the plurality of different motor control parameters. The rotation signal may be indicative that the motor control parameter is successfully selected. The motor may be configured to rotate for a predetermined number of turns, in a predetermined direction, and/or to a predetermined position. The motor may be configured to rotate in a predefined sequence spaced apart at a same or different time intervals.

In some embodiments, the method may further comprise: providing a first driving signal for driving the motor to generate a first indicator signal when the motor control parameter is successfully selected. The method may also further comprise: providing a second driving signal for driving the motor to generate a second indicator signal when the motor control parameter is not successfully selected. The first indicator signal may be different from the second indicator signal. The first indicator signal and the second indicator signal may be selected from the group consisting of: (1) audio signals, (2) visual signals, (3) vibration signals, and (4) motor rotational signals.

According to another aspect of the invention, a method for controlling a motor is provided. The method may comprise: operating the motor to generate an electrical signal; and outputting the electrical signal from the motor to one or more processors, wherein the electrical signal is configured to be used by the one or more processors as an input for selecting a motor control parameter from a plurality of different motor control parameters.

A system may be provided in accordance with an additional aspect of the invention. The system may comprise: a motor configured to generate an electrical signal when the motor is operated; and one or more processors individually or collectively configured to control the motor, wherein the motor is configured to output the electrical signal to the one or more processors, and wherein the electrical signal is configured to be used by the one or more processors as an input for selecting a motor control parameter from a plurality of different motor control parameters.

In some embodiments, operating the motor to generate the electrical signal may comprise manually rotating the motor without the motor being powered on. Alternatively, operating the motor to generate the electrical signal may comprise manually rotating the motor with the motor being powered on. The motor may be powered by an electric current provided via the one or more processors. The electrical signal may be generated at a phase end of the motor, and output from the phase end to the one or more processors. The electrical signal may be indicative of a counter electromotive force (EMF) generated by the operation of the motor. The plurality of different motor control parameters may be associated with a plurality of different ways of controlling the motor. Operating the motor to generate the electrical signal may comprise manually rotating the motor. The motor may be configured to be manually rotated (i) in different directions, (ii) at different speeds, (iii) in different rotation sequences, (iv) having different number of turns, and/or (v) to different rotational positions. Each one of the plurality of different motor control parameters may be associated with a unique manner of operating the motor based on at least one of (i)-(v).

In some embodiments, the plurality of different motor control parameters may be associated with and selected using a plurality of different user inputs. The plurality of different user inputs may comprise a user's manual rotation of the motor (1) in different directions and/or (2) for different number of turns. In some instances, a first user input may be used to select a first motor control parameter, and a second user input may be used to select a second motor control parameter. The first user input and the second user input may be different, and the first motor control parameter and the second motor control parameter may be different.

In some embodiments, the plurality of different motor control parameters may comprise instructions for controlling a (i) a direction of rotation, (ii) a rotation timing, (iii) an acceleration, and/or (iv) a deceleration of the motor, (v) a normal phase-change timing, (vi) an advanced phase-change timing, and/or (vii) a voluntary deceleration of the motor. The selected motor control parameter may comprise instructions for controlling any one of (i)-(vii). The direction of rotation may comprise a clockwise direction or a counterclockwise direction of rotation. The rotation timing, acceleration, and deceleration may respectively comprise one or more rotation timings, one or more acceleration settings, and one or more deceleration settings associated with one or more operational modes. The one or more operational modes may comprise a normal mode and an advanced mode. The advanced mode may provide a higher acceleration force, a higher deceleration force (braking power), and/or a faster rotation timing compared to the normal mode.

In some embodiments, the plurality of different motor control parameters may be associated with a plurality of different predefined electrical signals. The plurality of different predefined electrical signals may be associated with a plurality of predefined user inputs to the motor. The plurality of predefined user inputs may comprise (i) a speed of rotation, (ii) a direction of rotation, (iii) a rotation sequence, (iv) a number of rotation turns, and/or (v) a rotational position of the motor. In some instances, the plurality of different motor control parameters and the plurality of predefined user inputs may be provided in a look-up table.

In some embodiments, the method may further comprise: (1) comparing the electrical signal to the plurality of different predefined electrical signals, and (2) selecting the motor control parameter from the plurality of different motor control parameters when the electrical signal matches a predefined electrical signal that is associated with the selected motor control parameter.

In some embodiments, selecting the motor control parameter may further comprise: activating a mode that allows a value of the motor control parameter to be adjusted. The method may further comprise: adjusting the selected motor control parameter to a desired value after the motor control parameter is selected from the plurality of different motor control parameters. Adjusting the selected motor control parameter to the desired value may comprise calculating the desired value based on (i) a maximum value of the selected motor control parameter, (ii) a maximum output value of the motor, and (iii) a present output value of the motor. The maximum output value and the present output value of the motor may be associated with a speed, acceleration, rotating timing, and/or torque of the motor. The present output value of the motor may be obtained from the electrical signal. A ratio of the desired value to the maximum value of the selected motor control parameter may be proportional to a ratio of the present output value to the maximum output value of the motor.

In some embodiments, the method may further comprise: providing a driving signal for driving the motor to generate an audio signal when the motor control parameter is selected from the plurality of different motor control parameters. The audio signal may be generated at a predetermined audio frequency and/or for a predetermined length of time. The audio signal may comprise a predetermined sequence of sounds spaced apart at a same or different time intervals.

In some embodiments, the method may further comprise: providing a driving signal for driving a set of visual indicators to generate a visual signal when the motor control parameter is selected from the plurality of different motor control parameters. The set of visual indicators may comprise a plurality of lighting elements. The visual signal may be generated at a predetermined frequency and/or for a predetermined length of time. The visual signal may comprise a predetermined sequence of light flashes spaced apart at a same or different time intervals.

In some embodiments, the method may further comprise: providing a driving signal for driving the motor to generate a vibration signal when the motor control parameter is selected from the plurality of different motor control parameters. The vibration signal may be indicative that the motor control parameter is successfully selected. The motor may be configured to vibrate at a predefined frequency and/or for a predetermined length of time. The motor may be configured to vibrate in a predefined sequence of vibrations spaced apart at a same or different time intervals.

In some embodiments, the method may further comprise: providing a driving signal for driving the motor to generate a rotation signal when the motor control parameter is selected from the plurality of different motor control parameters. The rotation signal may be indicative that the motor control parameter is successfully selected. The motor may be configured to rotate for a predetermined number of turns, in a predetermined direction, and/or to a predetermined position. The motor may be configured to rotate in a predefined sequence spaced apart at a same or different time intervals.

In some embodiments, the method may further comprise: providing a first driving signal for driving the motor to generate a first indicator signal when the motor control parameter is successfully selected. The method may also further comprise: providing a second driving signal for driving the motor to generate a second indicator signal when the motor control parameter is not successfully selected. The first indicator signal may be different from the second indicator signal. The first indicator signal and the second indicator signal may be selected from the group consisting of: (1) audio signals, (2) visual signals, (3) vibration signals, and (4) motor rotational signals.

Further aspects of the invention may be directed to a method for controlling a propulsion system. The method may comprise: operating a motor when the motor is not outputting a propulsion force; and selecting a motor control parameter of a motor controller based on the operation of the motor, wherein the motor controller is configured to control the motor to output the propulsion force based on the selected motor control parameter.

A propulsion system may be provided in accordance with additional aspects of the invention. The propulsion system may comprise: a motor configured to output a propulsion force; and a motor controller electrically connected to the motor and configured to control the motor to output the propulsion force based on a selected motor control parameter, wherein the motor control parameter is selected based on an operation of the motor when the motor is not outputting the propulsion force.

In some embodiments, the propulsion system may be located on an unmanned aerial vehicle (UAV). The motor may be configured to output the propulsion force to power flight of the UAV. The motor controller may be an electronic speed controller (ESC) onboard the UAV.

In some embodiments, operating the motor may comprise manually rotating the motor without the motor being powered on. Alternatively, operating the motor may comprise manually rotating the motor with the motor being powered on. The motor may be powered by a constant electric current. The motor may be operated to generate an electrical signal when the motor is not outputting the propulsion force. The electrical signal may be indicative of a counter electromotive force (EMF) generated by the operation of the motor. The electrical signal may be generated at a phase end of the motor, and output from the phase end to a port of the motor controller.

In some embodiments, the motor control parameter may be selected from a plurality of different motor control parameters. The plurality of different motor control parameters may be associated with a plurality of different ways of controlling the motor. Operating the motor to generate the electrical signal may comprise manually rotating the motor.

The motor may be configured to be manually rotated (i) in different directions, (ii) at different speeds, (iii) in different rotation sequences, (iv) having different number of turns, and/or (v) to different rotational positions. Each one of the plurality of different motor control parameters may be associated with a unique manner of operating the motor based on at least one of (i)-(v).

In some embodiments, the plurality of different motor control parameters may be associated with and selected using a plurality of different user inputs. The plurality of different user inputs may comprise a user's manual rotation of the motor (1) in different directions and/or (2) for different number of turns. In some instances, a first user input may be used to select a first motor control parameter, and a second user input may be used to select a second motor control parameter. The first user input and the second user input may be different, and the first motor control parameter and the second motor control parameter may be different. The plurality of different motor control parameters may comprise instructions for controlling a (i) a direction of rotation, (ii) a rotation timing, (iii) an acceleration, (iv) a deceleration of the motor, (v) a normal phase-change timing, (vi) an advanced phase-change timing, and/or (vii) a voluntary deceleration of the motor. The selected motor control parameter may comprise instructions for controlling any one of (i)-(vii). The direction of rotation may comprise a clockwise direction or a counterclockwise direction of rotation. The rotation timing, acceleration, and deceleration may respectively comprise one or more rotation timings, one or more acceleration settings, and one or more deceleration settings associated with one or more operational modes. The one or more operational modes may comprise a normal mode and an advanced mode. The advanced mode may provide a higher acceleration force, a higher deceleration force (braking power), and/or a faster rotation timing compared to the normal mode.

In some embodiments, the plurality of different motor control parameters may be associated with a plurality of different predefined electrical signals. The plurality of different predefined electrical signals may be associated with a plurality of predefined user inputs to the motor. The plurality of predefined user inputs may comprise (i) a speed of rotation, (ii) a direction of rotation, (iii) a rotation sequence, (iv) a number of rotation turns, and/or (v) a rotational position of the motor. In some cases, the plurality of different motor control parameters and the plurality of predefined user inputs may be provided in a look-up table.

In some embodiments, the method may further comprise: (1) comparing the electrical signal to the plurality of different predefined electrical signals, and (2) selecting the motor control parameter from the plurality of different motor control parameters when the electrical signal matches a predefined electrical signal that is associated with the selected motor control parameter.

In some embodiments, selecting the motor control parameter may further comprise: activating a mode that allows a value of the motor control parameter to be adjusted. The method may further comprise: adjusting the selected motor control parameter to a desired value after the motor control parameter is selected from the plurality of different motor control parameters. Adjusting the selected motor control parameter to the desired value may comprise calculating the desired value based on (i) a maximum value of the selected motor control parameter, (ii) a maximum output value of the motor, and (iii) a present output value of the motor. The maximum output value and the present output value of the motor may be associated with a speed, acceleration, rotating timing, and/or torque of the motor. The present output value of the motor may be obtained from the electrical signal. A ratio of the desired value to the maximum value of the selected motor control parameter may be proportional to a ratio of the present output value to the maximum output value of the motor.

In some embodiments, the method may further comprise: providing a driving signal for driving the motor to generate an audio signal when the motor control parameter is selected from the plurality of different motor control parameters. The audio signal may be generated at a predetermined audio frequency and/or for a predetermined length of time. The audio signal may comprise a predetermined sequence of sounds spaced apart at a same or different time intervals.

In some embodiments, the method may further comprise: providing a driving signal for driving a set of visual indicators to generate a visual signal when the motor control parameter is selected from the plurality of different motor control parameters. The set of visual indicators may comprise a plurality of lighting elements. The visual signal may be generated at a predetermined frequency and/or for a predetermined length of time. The visual signal may comprise a predetermined sequence of light flashes spaced apart at a same or different time intervals.

In some embodiments, the method may further comprise: providing a driving signal for driving the motor to generate a vibration signal when the motor control parameter is selected from the plurality of different motor control parameters. The vibration signal may be indicative that the motor control parameter is successfully selected. The motor may be configured to vibrate at a predefined frequency and/or for a predetermined length of time. The motor may be configured to vibrate in a predefined sequence of vibrations spaced apart at a same or different time intervals.

In some embodiments, the method may further comprise: providing a driving signal for driving the motor to generate a rotation signal when the motor control parameter is selected from the plurality of different motor control parameters. The rotation signal may be indicative that the motor control parameter is successfully selected. The motor may be configured to rotate for a predetermined number of turns, in a predetermined direction, and/or to a predetermined position. The motor may be configured to rotate in a predefined sequence spaced apart at a same or different time intervals.

In some embodiments, the method may further comprise: providing a first driving signal for driving the motor to generate a first indicator signal when the motor control parameter is successfully selected. The method may also further comprise: providing a second driving signal for driving the motor to generate a second indicator signal when the motor control parameter is not successfully selected. The first indicator signal may be different from the second indicator signal. The first indicator signal and the second indicator signal may be selected from the group consisting of: (1) audio signals, (2) visual signals, (3) vibration signals, and (4) motor rotational signals.

It shall be understood that different aspects of the invention can be appreciated individually, collectively, or in combination with each other. Various aspects of the invention described herein may be applied to any of the particular applications set forth below or for any other types of motors and/or stabilizing platforms. Any description herein of a movable object may apply to and be used for any manned or unmanned vehicle. Other objects and features of the present invention will become apparent by a review of the specification, claims, and appended figures.

## INCORPORATION BY REFERENCE

All publications, patents, and patent applications mentioned in this specification are herein incorporated by reference to the same extent as if each individual publication, patent, or patent application was specifically and individually indicated to be incorporated by reference.

## BRIEF DESCRIPTION OF THE DRAWINGS

The novel features of the invention are set forth with particularity in the appended claims. A better understanding of the features and advantages of the present invention will be obtained by reference to the following detailed description that sets forth illustrative embodiments, in which the principles of the invention are utilized, and the accompanying drawings of which:

FIG. 1 is a block diagram of a movable object comprising a motor controller and a motor, in accordance with some embodiments.

FIG. 2 illustrates a block diagram of a system for operating a motor controller, in accordance with some embodiments.

FIG. 3 illustrates a system for operating a motor controller coupled to a three-phase motor, in accordance with some embodiments.

FIG. 4 illustrates the change in amplitude and frequency of a counter EMF sinusoidal waveform generated by a motor when a user rotates the motor at different speeds, in accordance with some embodiments.

FIG. 5 illustrates the three motor phases A, B, and C of the motor in **FIG. 3,** in accordance with some embodiments.

FIG. 6 shows the phase difference between two phases ends when a user rotates a motor in opposite directions, in accordance with some embodiments.

FIG. 7 shows the phase difference between multiple phases ends when a user rotates a motor in opposite directions, in accordance with some embodiments.

FIG. 8 illustrates a system for operating a motor controller when a constant reference electric current is provided to a motor, in accordance with some embodiments.

FIG. 9 illustrates a tool for operating a motor to generate a counter EMF for selecting a motor control parameter, in accordance with some embodiments.

FIG. 10 illustrates a gauge that allows a user to turn a motor in a calibrated manner, in accordance with some embodiments.

FIG. 11 illustrates a system for providing sensory feedback to a user via a motor when a motor control parameter is selected, in accordance with some embodiments.

FIG. 12 illustrates a system for providing sensory feedback to a user via one or more indicators when a motor control parameter is selected, in accordance with some embodiments.

FIG. 13 illustrates a system for controlling a propulsion system based on a selected motor control parameter, in accordance with some embodiments.

FIG. 14 is a schematic block diagram of a system for controlling a movable object, in accordance with some embodiments.

## DETAILED DESCRIPTION

The present disclosure provides systems, methods, and devices for programming a motor controller. The motor controller can be used to control a motor in a propulsion unit on a vehicle (such as a UAV). In particular, the present disclosure addresses at least the following needs relating to programming of motor controllers.

Existing approaches for programming a motor controller may not be optimal in some instances. For example, a computing device (such as a personal computer) or a dedicated motor controller programming card is typically used to adjust motor control parameters of a motor controller. However, out-field or on-site motor control parameter adjustments may not be feasible if a user did not, or has forgotten to bring a computing device or a programming card. Also, carrying a computing device or programming card around with a vehicle (e.g., a UAV) may limit the mobility of the user. Before the motor control parameters of a motor controller can be adjusted, the computing device or programming card needs to be powered on. In some places such as remote locations with no power source, the computing device or programming card may not be usable if their battery charge is low or depleted.

To select and/or adjust motor control parameters, a computing device or programming card has to be electrically connected to the motor controller, for example via a communication port of the motor controller. Oftentimes, the motor controller is located within a housing of a vehicle, and may not be easily accessible to a user. For example, a user may have to unscrew and remove parts of the housing to access the communication port of the motor controller. In some instances, the communication port of the motor controller may be connected to other components (such as a flight controller) of the vehicle via a control cable. A user may have to first disconnect the control cable, so that the communication port of the motor controller is available for connecting to the computing device or programming card. After completing the motor control parameter adjustments, the user will have to reconnect the control cable and reassemble the housing of the vehicle. The above sequence of steps can be labor and time-intensive, and cause significant inconvenience to the user.

Accordingly, there is a need to improve the ease and convenience of programming a motor controller out-field or on-site, without relying on additional accessories such as a computing device or programming card. The motor controllers and motors provided herein can address the above need.

A programmable motor controller may be provided in accordance with embodiments of the invention. The motor controller can be programmed (1) using a motor operably coupled to the motor controller, and (2) without requiring the use of a computing device or a motor controller programming card. The motor controller may comprise an electronic speed control (ESC) module. Alternatively, the motor controller may be part of an ESC module. The programming of the motor controller may include selecting and/or adjusting one or more motor control parameters of the motor controller.

The motor controller may be operably coupled to the motor through a communication interface that permits two-way communication between the motor controller and the motor. The communication interface may include one or more ports on each of the motor controller and the motor. The motor can be used as an input device for selecting and/or adjusting one or more motor control parameters of the motor controller. For example, a user can manually rotate the motor rotor at different speeds, in different directions (e.g., clockwise or counterclockwise), and/or different number of turns to select and/or adjust one or more motor control parameters via the motor controller. A motor control parameter can be selected and/or adjusted based on a counter electromotive force (EMF) generated by a user-input rotation to the motor.

The motor controller can be configured to control operation of the motor based on the selected and/or adjusted motor control parameters. In some embodiments, the motor may be part of a propulsion system on a vehicle. The vehicle may be any movable object. In some instances, the vehicle may be an unmanned aerial vehicle (UAV). The motor controller and the propulsion unit comprising the motor may be located onboard the UAV.

Although various embodiments of the invention are described herein with respect to a brushless motor and control of a brushless motor, it should be appreciated that the invention can also be applied to direct current (DC) brush motors, rotational motors, servo motors, direct-drive rotational motors, DC torque motors, linear solenoids stepper motors, ultrasonic motors, geared motors, speed-reduced motors, hydraulic actuators, pneumatic actuators, or piggybacked motor combinations. In some cases, direct-drive motors may include compact motors or miniaturized motors, and can be controlled in a stepless fashion to reduce response time and enable fast and timely speed/acceleration/rotational direction adjustments in response to various attitude changes of the vehicle.

Next, various embodiments of the invention will be described in detail with reference to the drawings.

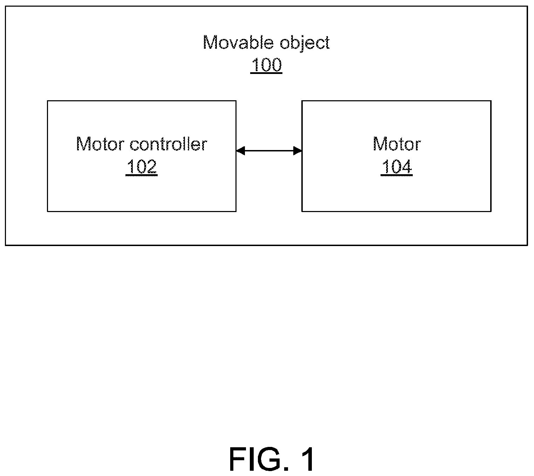

**FIG.** 1 is a block diagram of a movable object comprising a motor controller and a motor, in accordance with some embodiments. A movable object **100** is provided. The movable object may be any object capable of traversing a physical environment. The movable object may be capable of traversing air, water, land, and/or space. The movable object may be a vehicle, a handheld device, and/or a robot. The vehicle may be a self-propelled vehicle. The vehicle may traverse the environment with aid of one or more propulsion units. The vehicle may be an aerial vehicle, a land-based vehicle, a water-based vehicle, or a space-based vehicle. The vehicle may be an unmanned vehicle. The vehicle may be capable of traversing the environment without a human passenger onboard. Alternatively, the vehicle may carry a human passenger. In some embodiments, the movable object may be an unmanned aerial vehicle (UAV). Any description herein of a UAV may apply to any other type of movable object or various categories of movable objects in general, or vice versa. For instance, any description herein of a UAV may apply to any unmanned land-bound, water-based, or space-based vehicle.

As mentioned above, the movable object may be capable of traversing a physical environment. In some embodiments, the movable object may be capable of flight within three dimensions. The movable object may be capable of spatial translation along one, two, or three axes. The one, two or three axes may be orthogonal to one another. The axes may be along a pitch, yaw, and/or roll axis. The movable object may be capable of rotation about one, two, or three axes. The one, two, or three axes may be orthogonal to one another. The axes may be a pitch, yaw, and/or roll axis. The movable object may be capable of movement along up to 6 degrees of freedom. The movable object may include one or more propulsion units that may aid the movable object in movement. For instance, the movable object may be a UAV with one, two or more propulsion units. The propulsion units may be configured to generate lift for the UAV. The propulsion units may include rotors. The movable object may be a multi-rotor UAV.

The movable object may have any physical configuration. For instance, the movable object may have a central body with one or arms or branches extending from the central body. The arms may extend laterally or radially from the central body. The arms may be movable relative to the central body or may be stationary relative to the central body. The arms may support one or more propulsion units. For instance, each arm may support one, two or more propulsion units.

The movable object **100** can be operated completely autonomously (e.g., by a suitable computing system such as an onboard control module), semi-autonomously, or manually (e.g., by a human user). The movable object can receive commands from a suitable entity (e.g., human user or autonomous control module) and respond to such commands by performing one or more actions. For example, the movable object can be controlled to take off from the ground, move within the air (e.g., with up to three degrees of freedom in translation and up to three degrees of freedom in rotation), move to a target location or to a sequence of target locations, hover within the air, land on the ground, and so on. As another example, the movable object can be controlled to move at a specified velocity and/or acceleration (e.g., with up to three degrees of freedom in translation and up to three degrees of freedom in rotation) or along a specified movement path. Furthermore, the commands can be used to control one or more movable object components, such as the components described herein (e.g., sensors, actuators, propulsion units, payload, etc.). For instance, some commands can be used to control the position, orientation, and/or operation of a movable object payload such as a camera.

In some embodiments, the movable object includes a plurality of components that are controllable to perform various operations. Examples of components that can be included in a movable object include but are not limited to: propulsion units that effect movement of the movable object (e.g., with respect to up to three degrees of freedom in translation and up to three degrees of freedom in rotation), sensors that collect various types of information (e.g., state information, environmental information), communication modules that facilitate communication between the movable object and one or more remote devices (e.g., a remote controller or terminal), or suitable combinations thereof. The components can respond to control signals in order to perform the operations.

For example, the movable object can include one or more propulsion units that are actuated in order to effect movement of the movable object. Exemplary propulsion units can include one or more engines, motors, wheels, axles, magnets, rotors, propellers, blades, nozzles, or suitable combinations thereof. The movable object can include any suitable number of propulsion units, such as one, two, three, four, five, six, seven, eight, or more propulsion units. The propulsion units may all be of the same type. Alternatively, the movable object can use or include different types of propulsion units. The propulsion units can be mounted on the movable object in a variety of ways, e.g., via a fixed coupling, a releasable coupling, a movable coupling, a rotatable coupling, and the like. The propulsion units can be mounted on any suitable portion of the movable object, such on the top, bottom, front, back, sides, or suitable combinations thereof. Different propulsion units can be situated on different portions of the movable object. The positions of the propulsion units on the movable object can be fixed. Alternatively, some or all of the propulsion units can be movable relative to the movable object. For example, a movable object (e.g., a UAV) can have a central body and a plurality of branch members or arms extending outward from the central body. The branch members can be fixed relative to the central body and/or to each other. Alternatively, some or all of the branch members can be movable relative to the central body and/or to each other, e.g., by translating, rotating, folding, telescoping, bending, and the like. In some embodiments, the branch members can be rotated to a plurality of different angles relative to a vertical axis of the movable object. The propulsion units of the movable object can be positioned on the branch members, e.g., near the distal portions of the branch members, such that the propulsion units are moved relative to each other and/or the central body according to the movement of the branch members.

The propulsion units can include one or more components that are actuated (e.g., by a suitable actuator such as a motor or engine) in order to provide forces that effect movement of the movable object. In some embodiments, the propulsion units can enable the movable object to take off vertically from a surface or land vertically on a surface without requiring any horizontal movement of the movable object (e.g., without traveling down a runway). Optionally, the propulsion units can be operable to permit the movable object to hover in the air at a specified position and/or orientation. The actuation can be controlled using suitable actuation signals, e.g., provided by a functional module that controls operation of the propulsion unit, as described in further detail herein. One or more of the propulsion units may be controlled independently of the other propulsion mechanisms. Alternatively, the propulsion units can be configured to be controlled simultaneously.

In some embodiments, the propulsion units of a movable object can include one or more rotors. Such rotors can be actuated (e.g., rotated) in a variety of ways in order to generate propulsive forces (e.g., lift forces, thrust forces) for effecting movement of the movable object. For example, a suitable actuator (e.g., engine or motor, such as a brushed DC motor or brushless DC motor) can be operably coupled to the rotor in order to drive the rotation of the rotor. The rotor can be a horizontal rotor (which may refer to a rotor having a horizontal plane of rotation), a vertically oriented rotor (which may refer to a rotor having a vertical plane of rotation), or a rotor tilted at an intermediate angle between the horizontal and vertical positions. In some embodiments, horizontally oriented rotors may spin and provide lift to the movable object. Vertically oriented rotors may spin and provide thrust to the movable object. Rotors oriented an intermediate angle between the horizontal and vertical positions may spin and provide both lift and thrust to the movable object. The forces generated by the rotation of the rotors can be of a sufficient magnitude to propel the movable object. In some embodiments, the rotors can be configured to spin at a rate suitable for generating the desired propulsive forces. The rotation rate can be based on the dimensions of the movable object (e.g., size, weight), and the movable object may have any suitable dimensions as described elsewhere herein.

One or more rotors may be used to provide a torque counteracting a torque produced by the spinning of another rotor. For example, a movable object can have multiple horizontally oriented rotors that are actuated (e.g., rotated) in order to provide lift and/or thrust to the movable object. The multiple horizontally oriented rotors can be actuated to provide vertical takeoff, vertical landing, and hovering capabilities to the movable object. In some embodiments, one or more of the horizontally oriented rotors may rotate in a clockwise direction, while one or more of the horizontally rotors may rotate in a counterclockwise direction. For example, the number of clockwise rotors may be equal to the number of counterclockwise rotors. The rotation rate of each of the horizontally oriented rotors can be varied independently in order to control the lift and/or thrust produced by each rotor, and thereby adjust the position, orientation, velocity, and/or acceleration of the movable object (e.g., with respect to up to three degrees of translation and up to three degrees of rotation).

As shown in **FIG. 1,** the movable object **100** may include a motor controller **102** and a motor **104.** The motor may be part of a propulsion unit of the movable object. The motor controller may be operably coupled to the motor. In some embodiments, the movable object may include a plurality of motor controllers operably coupled to a plurality of motors. In some cases, a motor controller may be configured to control more than one motor. The motor controller can be connected to the motor in any suitable manner enabling communication, e.g., via electrical connectors such as wires, cables, or other types of connecting elements. The motor controller may be an electronic speed control (ESC) module. The motor controller may be coupled to a flight control module via a signal line that permits flight control signals to be transmitted from the flight control module to the motor controller. Additionally, the motor controller can be configured to transmit information to the flight control module, e.g., information regarding the current operational status of the motor controller and/or the coupled motor.

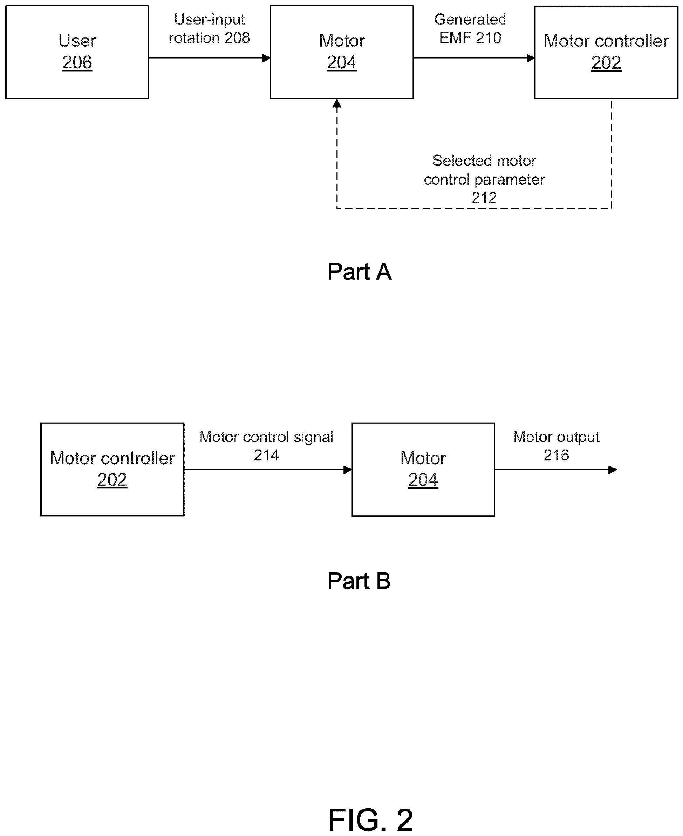

According to various embodiments of the invention, the motor controller can be programmed using the motor. For example, one or more motor control parameters of the motor controller can be selected and/or adjusted using the motor as an input device, as described below with reference to **FIGs. 2** through **13.**

**FIG. 2** illustrates a block diagram of a system for operating a motor controller in accordance with some embodiments. Referring to part A of **FIG. 2,** a motor controller **202** may be operably coupled to a motor **204.** A user **206** can use the motor to program the motor controller. For example, the user can provide an input via the motor, to select and/or adjust one or more motor control parameters of the motor controller. The user input may comprise a rotation **208** of the motor rotor. For example, the user may manually rotate the motor rotor by hand. An electrical signal indicative of a counter electromotive force (EMF) **210** is generated when the user rotates the motor. The counter EMF is generated by the motor. In some embodiments, the counter EMF may be generated without the motor being powered on. Alternatively, the counter EMF may be generated with the motor being powered on. In those alternative embodiments, the motor may be powered on by an electric current provided from the motor controller. The electric current may be from a power source that is located at, or remote from, the motor controller. The electric current may be a constant direct current.

The motor controller may include a port configured to be electrically connected to the motor. The motor controller may be configured to obtain the electrical signal via the port. For example, the electrical signal may be (1) generated at a phase end of the motor when the user rotates the motor, and (2) output from the phase end of the motor to the port of the motor controller. One or more processors in the motor controller may be configured to, either individual or collectively, select a motor control parameter from a plurality of different motor control parameters based on the electrical signal.

Referring to part B of **FIG. 2,** after the motor control parameter has been selected, the motor controller **202** can be configured to control the motor **204** based on the selected motor control parameter. For example, the motor controller can generate and transmit a motor control signal **214** based on the selected motor control parameter to the motor. The motor can generate a motor output **216** in response to the motor control signal. In some embodiments, the motor may be part of a propulsion system. The motor controller may be configured to control the motor to output a propulsion force based on the selected motor control parameter. The propulsion force can be used to propel a movable object such as a UAV.

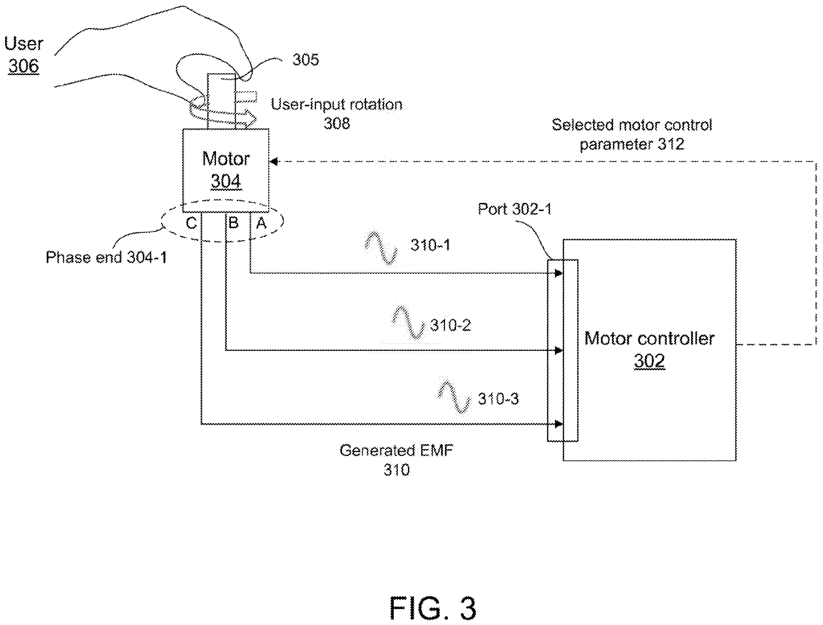

**FIG. 3** illustrates a system for operating a motor controller coupled to a three-phase motor, in accordance with some embodiments. A motor controller **302** may be operably coupled to a motor **304**. For example, a port **302-1** on the motor controller may be configured to be electrically connected to a phase end **304** of the motor. The motor **304** may be a three-phase brushless direct-current electric (BLDC) motor.

A user **306** can provide an input rotation **308** to the motor when it is powered off, for example by manually rotating a rotor **305** of the motor. When the motor is being manually driven, the motor becomes a generator, and a counter EMF can be produced by the various motor phases A, B, and C. As previously described, an electrical signal indicative of the counter EMF is output from the phase end **304-1** of the motor to the port **302-1** of the motor controller when the user rotates the motor.

The electrical signal may comprise a plurality of signal waveforms having an amplitude, a frequency, and a phase difference. In the example of **FIG. 3,** the plurality of signal waveforms **310-1, 310-2,** and **310-3** are generated at a plurality of phase ends (corresponding to motor phases A, B, and C) of the motor, and output from the plurality of phase ends to the port **302-1** of the motor controller. Since the motor **304** is a three-phase brushless motor, the plurality of signal waveforms may include three sinusoidal waveforms having a phase difference of 120° with respect to each other. The plurality of signal waveforms are indicative of the counter EMF that is generated when the user manually rotates the motor. The counter EMF generated by the motor is given by the following equation:

$$V_{EMF} = K_e \omega$$

where $V_{EMF}$ is an amplitude of the counter EMF, $K_e$ is a counter EMF constant which is an inherent parameter of the motor, and $\omega$ is an angular speed of the motor as the motor is being manually rotated by the user. $K_e$ is also known as a motor velocity constant, and is measured in revolutions per minute (RPM) per volt. The $K_e$ rating of a brushless motor is the ratio of the motor's unloaded RPM to the peak voltage (counter EMF) on the wires connected to the coils of the motor.

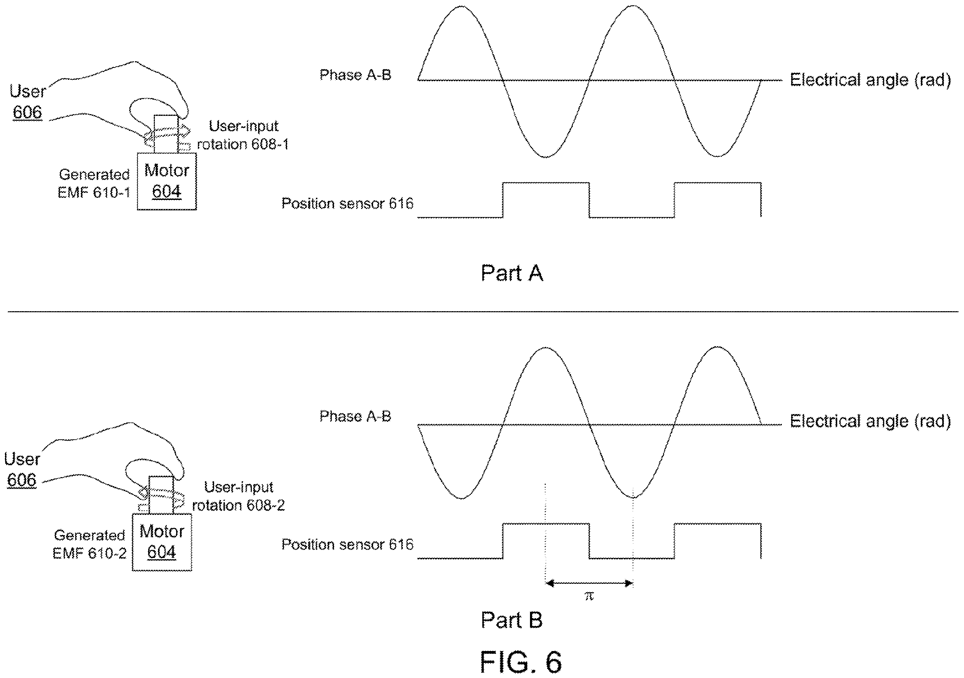

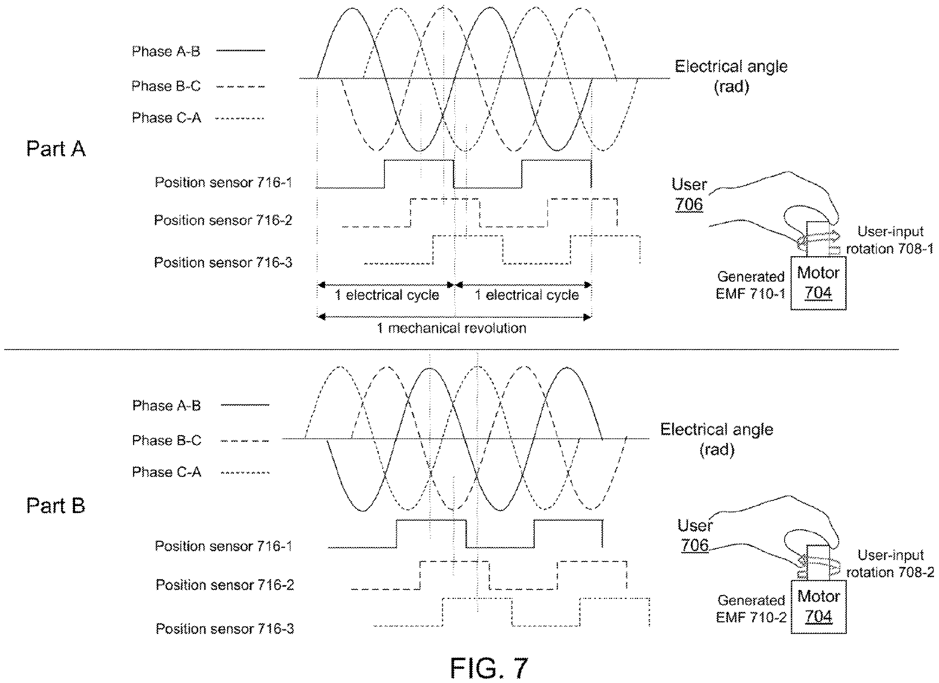

The amplitude and frequency of the plurality of signal waveforms can be indicative of a speed of rotation of the motor as the motor is being manually rotated by the user. The amplitude of the signal waveforms is given by $V_{EMF}$. The frequency of the signal waveforms is equal to $\omega/2\pi$. The phase difference can be indicative of a direction of rotation of the motor when the motor is being manually rotated, as described in detail later with reference to **FIG. 6.** Additionally, the phase difference can be indicative of an angle of rotation of the motor, as described in detail later with reference to **FIG. 7.**

The plurality of signal waveforms can be received at the port of the motor controller, and analyzed using one or more processors in the motor controller. For example, the processors in the motor controller can be configured to detect a variation in the plurality of signal waveforms when the motor is being manually rotated by the user. The variation in the plurality of signal waveforms can comprise: (i) a change in amplitude, (ii) a change in frequency, and/or (iii) a change in phase difference of the plurality of signal waveforms.

By analyzing the variation in the plurality of signal waveforms, the motor controller can determine various characteristics associated with the user-input rotation **308.** For example, the motor controller can determine a speed at which the user is rotating the motor, based on the amplitude and frequency of the signal waveforms. Additionally, the motor controller can determine, based on the phase difference between the waveforms, one or more of the following: (1) a direction (clockwise or counterclockwise) in which the user is rotating the motor, (2) number of turns that the user has rotated the motor, and/or (3) a degree of rotation of the motor.

In some embodiments, a plurality of different motor control parameters can be associated with a plurality of different predefined electrical signals. The plurality of different predefined electrical signals can be associated with a plurality of predefined user inputs to the motor. For example, the plurality of predefined user inputs can comprise: (i) a speed of rotation, (ii) a direction of rotation, (iii) a rotation sequence, (iv) a number of rotation turns, and/or (v) a rotational position of the motor.

In some cases, the plurality of different motor control parameters and the plurality of predefined user inputs can be provided in a look-up table. The look-up table can be stored in a memory module onboard or remote from a movable object. In some instances, the look-up table can be stored in a memory module located at the motor controller, or in a memory module that is accessible by the motor controller.

In some embodiments, the motor **304** and the motor controller **302** may be provided on a movable object. A manufacturer or distributor of the movable object may associate different motor control parameters with different predefined electrical signals and predefined user inputs. The manufacturer or distributor may also generate a look-up table comprising the associated motor control parameters, predefined electrical signals, and predefined user inputs. The manufacturer or distributor may store the look-up table in a memory module onboard or remote from the movable object. The manufacturer or distributor may also provide the look-up table to a user, when the user purchases a movable object (e.g., a UAV) comprising the motor controller and the motor. The user can use the look-up table to program the motor controller, by using the motor to select and/or adjust different motor control parameters.

A plurality of different motor control parameters can comprise instructions for controlling: (i) direction of rotation, (ii) rotation timing, (iii) acceleration, (iv) deceleration, (v) normal phase-change timing, (vi) advanced phase-change timing, and/or (vii) voluntary deceleration of the motor, during operation of the motor. The operation of the motor may comprise the motor controller controlling the motor to generate a propulsion force. The direction of rotation can comprise a clockwise direction or a counterclockwise direction of rotation of the motor. The rotation timing, acceleration, and deceleration can respectively comprise one or more rotation timings, one or more acceleration settings, and one or more deceleration settings associated with one or more operational modes. In some embodiments, the operational modes may include a normal mode and an advanced mode. The advanced mode can provide a higher acceleration force, a higher deceleration force (braking power), and/or a faster rotation timing compared to the normal mode.

As previously mentioned, the motor **304** is configured to generate and transmit an electrical signal to the motor controller **302** when the motor receives a user-input rotation **308**. One or more processors in the motor controller can be configured to (1) compare the electrical signal to a plurality of different predefined electrical signals, and (2) select a motor control parameter from a plurality of different motor control parameters when the electrical signal matches a predefined electrical signal that is associated with the selected motor control parameter. The motor controller **302** can subsequently control operation of the motor **304** based on the selected motor control parameter **312,** as indicated by the dotted line from the motor controller to the motor.

Accordingly, different motor control parameters can be selected using different user inputs to the motor. As previously mentioned, different user inputs to the motor can cause the motor to generate different electrical signals. For example, different user inputs can be provided by a user manually rotating the motor (1) in different directions, and/or (2) for different number of turns. In some cases, different user inputs can be provided by a user rotating manually rotating the motor at different speeds, or different ranges of speeds. The different electrical signals can comprise signal waveforms having different amplitudes, frequencies, and/or phase differences.

In some embodiments, a first user input can be used to select a first motor control parameter, and a second user input can be used to select a second motor control parameter. The first user input and the second user input can be different. Likewise, the first motor control parameter and the second motor control parameter can be different. In one example, the first user input may include a user manually rotating the motor in a clockwise (CW) direction for three (3) turns, and the second user input may include the user manually rotating the motor in a counter clockwise (CCW) direction for two (2) turns. Selecting the first motor control parameter can set an advanced (high) motor timing for the motor. Conversely, selecting the second motor control parameter can set active acceleration of the motor to an "ON" state. It should be noted that the above user inputs and motor control parameters are merely exemplary. Additional types of user inputs and motor control parameters are further described elsewhere in the specification.

The motor controller (e.g. motor controller **302**) can be configured to detect the first user input, based on a first electrical signal that is generated by the motor due to the first user input. Upon detecting the first user input (or first electrical signal), the motor controller may select the first motor control parameter from a plurality of different motor control parameters. Likewise, the motor controller can be configured to detect the second user input, based on a second electrical signal that is generated by the motor due to the second user input. Upon detecting the second user input (or second electrical signal), the motor controller may select the second motor control parameter from the plurality of different motor control parameters. In some embodiments, the first motor control parameter and the second motor control parameter can be selected from a look-up table comprising a plurality of motor control parameters. As an example, when the first motor control parameter is selected, the motor controller may be configured to set the motor to an advanced (high) motor timing during operation of the motor. Conversely, when the second motor control parameter is selected, the motor controller may be configured to set (turn on) an active acceleration function during operation of the motor.

In some embodiments, the first motor control parameter may be selected by the motor controller when the first user input is provided to the motor. Next, when the second user input is provided to the motor, the motor controller may be configured to switch the selection from the first motor control parameter to the second motor control parameter. Next, when a third user input is provided to the motor, the motor controller may be configured to switch the selection from the second motor control parameter to the third motor control parameter. Accordingly, the motor controller can be configured to switch from one motor control parameter to another motor control parameter, depending on the user input to the motor.

In some alternative embodiments, two or more motor control parameters can be selected, and active at a same time. For example, the first, second, and third motor control parameters may all be selected and simultaneously active. The motor controller may be configured to control operation of the motor based on all three selected motor control parameters.

Values in the motor control parameters can be prefixed. Alternatively, the values in the motor control parameters can be adjustable. In some embodiments, the selecting of a motor control parameter can further comprise activating a mode that allows a value of the motor control parameter to be adjusted. For example, the selected motor control parameter can be adjusted to a desired value after the motor control parameter is selected from a plurality of different motor control parameters. The desired value can be calculated based on (i) a maximum value of the selected motor control parameter, (ii) a maximum output value of the motor, and (iii) a present output value of the motor. The maximum output value and the present output value of the motor may be associated with a speed, acceleration, rotating timing, and/or torque of the motor. The present output value of the motor can be obtained from the electrical signal. A ratio of the desired value to the maximum value of the selected motor control parameter may be proportional to a ratio of the present output value to the maximum output value of the motor. Accordingly, the desired value of the selected motor control parameter can be calculated using the following equation:

$$B_0 = (A_0 / A_{max}) * B_{max}$$

where $B_0$ is the desired value of the selected motor control parameter, $A_0$ is the present output value of the motor, $B_{max}$ is the maximum value of the selected motor control parameter, and $A_{max}$ is the maximum output value of the motor.

The value of the motor control parameter can be adjusted using any of the user inputs (or electrical signals) described elsewhere herein. In some embodiments, a value of a motor control parameter can be adjusted by changing an angle of rotation of the motor. The angle of rotation may be about 30°, 60°, 90°, 120°, 150°, 180°, 210°, 240°, 270°, 300°, 330°, 360°, or any values therebetween. In other embodiments, a value of a motor control parameter can be adjusted by rotating the motor to N number of turns, where N may be an integer or a fraction. For example, N may be ¼ turn, ½ turn, ¾ turn, 1 turn, 1½ turns, 2 turns, 3 turns, or any number of turns.

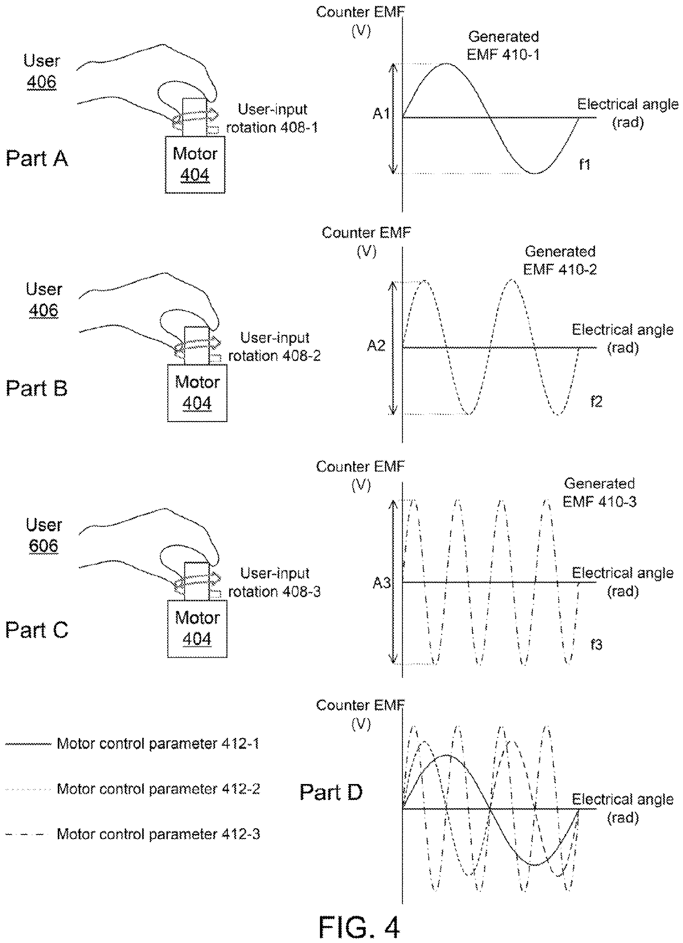

**FIG. 4** illustrates the change in amplitude and frequency of a counter EMF sinusoidal waveform generated by a motor when a user rotates the motor at different speeds in a predetermined direction, in accordance with some embodiments. As previously described in **FIG. 3,** the amplitude and frequency of a signal waveform can be indicative of a speed of rotation of the motor as the motor is being manually rotated by the user. For example, the amplitude and frequency of a generated EMF waveform are proportional to the user's manual speed of rotation ω of the motor.

As shown in Part A of **FIG. 4,** a user **406** may provide a first user-input rotation **408-1** to a motor **404,** in order to select a first motor control parameter **412-1** via a motor controller. The first user-input rotation may comprise the user rotating the motor in a predetermined direction at a first angular speed ω1. The predetermined direction can be either a clockwise direction or a counter clockwise direction of rotation. Alternatively, the first user-input rotation may comprise the user rotating the motor in the predetermined direction between a first range of angular speeds. The first range of angular speeds may range from $\omega_{11}$ to $\omega_{12}$, where $\omega_{12} > \omega_{11}$. The first user-input rotation can cause the motor to generate a first counter EMF **410-1.** The first counter EMF may be a sinusoidal waveform having amplitude A1 and frequency f1. The motor controller (e.g., motor controller **302** in **FIG. 3**) may be configured to receive a first electrical signal that is indicative of the first counter EMF, and select the first motor control parameter **412-1** based on the first electrical signal.

In some embodiments, the user may provide a second user-input rotation **408-2** to the motor 404, in order to select a second motor control parameter **412-2** via the motor controller, for example as shown in Part B of **FIG. 4.** The second user-input rotation may comprise the user rotating the motor in the predetermined direction at a second angular speed ω2, where ω2 > ω1. Alternatively, the second user-input rotation may comprise the user rotating the motor in the predetermined direction between a second range of angular speeds. The second range of angular speeds may range from $\omega_{21}$ to $\omega_{22}$, where $\omega_{22} > \omega_{21} > \omega_{12}$. The second user-input rotation can cause the motor to generate a second counter EMF **410-2.** The second counter EMF may be a sinusoidal waveform having amplitude A2 and frequency f2, where A2 > A1 and f2 > f1. The motor controller may be configured to receive a second electrical signal that is indicative of the second counter EMF, and select the second motor control parameter **412-2** based on the second electrical signal.

In some other embodiments, the user may provide a third user-input rotation **408-3** to the motor **404,** in order to select a third motor control parameter **412-3** via the motor controller, for example as shown in Part C of **FIG. 4.** The third user-input rotation may comprise the user rotating the motor in the predetermined direction at a third angular speed ω3, where ω3 > ω2. In some instances, the first angular speed ω1 may be about 20 RPM, the second angular speed ω2 may be about 40 RPM, and the third angular speed ω3 may be about 60 RPM. Alternatively, the third user-input rotation may comprise the user rotating the motor in the predetermined direction between a third range of angular speeds. The third range of angular speeds may range from $\omega_{31}$ to $\omega_{32}$, where $\omega_{32} > \omega_{31} > \omega_{22}$. In some cases, the first range of angular speeds may be about 20RPM to about 35 RPM, the second range of angular speeds may be about 40RPM to about 55 RPM, and the third range of angular speeds may be about 60RPM to about 75 RPM. It should be noted that the above speed values and ranges are merely exemplary, and any value may be contemplated.

The third user-input rotation can cause the motor to generate a third counter EMF **410-3.** The third counter EMF may be a sinusoidal waveform having amplitude A3 and frequency f3, where A3 > A2 and f3 > f2. The motor controller may be configured to receive a third electrical signal that is indicative of the third counter EMF, and select the third motor control parameter **412-3** based on the third electrical signal.

Part D of **FIG. 4** shows the counter EMF sinusoidal waveforms of Parts A, B, and C superimposed onto a same plot. The variations in amplitude and frequency of the waveforms with different user-input rotational speeds can be observed from the plot in Part D. Accordingly, by using the embodiments shown in **FIG. 4,** a user can select different motor control parameters via a motor controller by manually rotating a motor at different speeds.

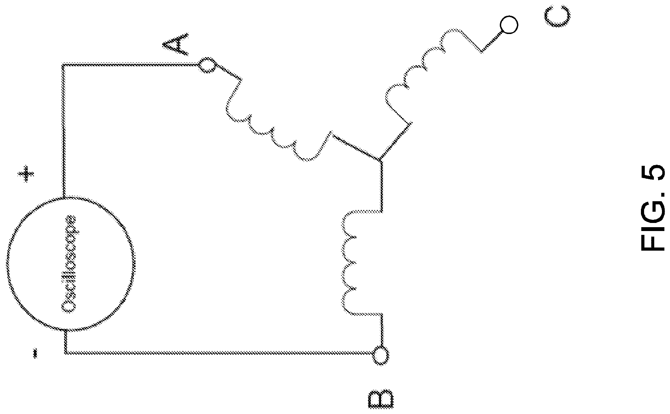

**FIG. 5** illustrates the three motor phases A, B, and C of the motor in **FIG. 3,** in accordance with some embodiments. An oscilloscope can be placed across phases A and B, with the positive (+) probe on phase A, and the negative (-) probe on phase B. When the motor is back driven (manually rotated by a user), the voltage that is detected by a voltmeter will be displayed as an approximate sinusoid over time on the oscilloscope. The sinusoidal waveform is indicative of a phase difference/relationship between motor phases A and B. In some instances, if the user's rotational speed is sufficiently high, the top and bottom portions of the sinusoidal waveform may be truncated to form a trapezoidal waveform. If the direction of rotation of the motor does not change, the phase relationship between A and B will remain constant regardless of rotational speed. When the direction of rotation of the motor changes, the phase relationship between phases A and B will change. The change in the phase relationship can be measured/observed using a position sensor, and is described below with reference to **FIG. 6.**

A brushless DC electric motor uses electronic commutation instead of mechanical commutation to control power distribution to the motor. Typically, one or more position sensors can be used to measure a rotor position in a brushless DC motor. The measured rotor position may be communicated to an electronic controller for implementing brushless motor commutation.

In some embodiments, a position sensor may be a linear Hall effect sensor. A Hall effect sensor is a solid state magnetic sensor device, and can be used for sensing position, velocity, and/or directional movement. The Hall effect sensor is a transducer that varies its output voltage in response to a magnetic field. The magnetic field is sensed by a Hall plate and a "Hall" voltage is developed across the biased Hall plate proportional to the induced magnetic flux. The Hall voltage is a potential difference that depends on both the magnitude and directions of the magnetic field and an electric current from a power supply. The Hall effect sensor operates as an analog transducer, directly returning an output voltage. With a known magnetic field, the distance from a pole of the magnetic field to the Hall plate can be determined. The Hall effect sensor can produce a linear output. The output signal for a linear analog Hall effect sensor can be obtained directly from the output of an operational amplifier, with the output voltage being directly proportional to the magnetic field passing through the Hall effect sensor. Advantages of Hall effect sensors include non-contact wear free operation, low maintenance, robust design, and low susceptibility to vibration, dust and moisture as a result of their robust packaging.

Part A of **FIG. 6** shows the relationship between phases A and B when a user provides a first user-input rotation to a motor. The first user-input rotation **608-1** may comprise a user **606** manually rotating a motor **604** in a first predetermined direction, which causes the motor to generate a first counter EMF **610-1.** The phase relationship in Part A is based on the first counter EMF **610-1,** and can be measured using the oscilloscope shown in **FIG. 5.** A position sensor **616** (e.g., a Hall effect sensor) is configured to generate a Hall voltage signal when the motor is manually rotated by the user in the first predetermined direction.

Part B of **FIG. 6** shows the relationship between phases A and B when the user provides a second user-input rotation **608-2** to the motor. The second user-input rotation may comprise the user manually rotating the motor in a second predetermined direction, which causes the motor to generate a second counter EMF **610-2.** The second predetermined direction may be opposite to the first predetermined direction. For example, in some embodiments, the first predetermined direction may be a clockwise direction and the second predetermined direction may be a counter clockwise direction. Alternatively, the first predetermined direction may be a counter clockwise direction and the second predetermined direction may be a clockwise direction.

The phase relationship in Part B is based on the second counter EMF **610-2,** and can be measured using the oscilloscope shown in **FIG. 5.** The position sensor **616** (e.g., the Hall effect sensor) is configured to generate a Hall voltage signal as the motor is manually rotated by the user in the second predetermined direction. Comparing Parts A and B of **FIG. 6,** when the motor is rotated in the second predetermined direction, the relationship between phase A-B and the Hall voltage signal is 180° out of phase, as shown in Part B. Accordingly, a motor controller can be configured to determine a direction of a user-input rotation (clockwise or counter clockwise), based on the relationship (phase difference) between phase A-B and the voltage signal generated by a position sensor.

**FIG. 7** is similar to **FIG. 6,** except **FIG. 7** shows the relationships between all three phases (A, B, and C) and a plurality of position sensors. In Part A of **FIG. 7,** a user **706** may provide a first user-input rotation **708-1** to a motor **704.** The first user-input rotation may comprise the user manually rotating the motor in the first predetermined direction, which causes the motor to generate a first counter EMF **710-1.** The phase relationship in Part A is based on the first counter EMF, and can be measured by one or more oscilloscopes. For example, a first oscilloscope can be placed across phases A and B, a second oscilloscope can be placed across phases B and C, and a third oscilloscope can be placed across phases C and A. When the motor is back driven (manually rotated by the user), the voltage that is detected by a voltmeter between any two phases (A-B, B-C, or C-A) will be displayed as an approximate sinusoid with time on each oscilloscope. For example, a first sinusoidal waveform may be indicative of a phase difference/relationship between motor phases A and B, a second sinusoidal waveform may be indicative of a phase difference/relationship between motor phases B and C, and a third sinusoidal waveform may be indicative of a phase difference/relationship between motor phases C and A. A plurality of position sensors (e.g., Hall effect sensors) **716-1, 716-2,** and **716-3** are configured to generate Hall voltage signals that are phase-shifted by 120° when the motor is manually rotated by the user in the first predetermined direction.

In Part B of **FIG. 7,** the user may provide a second user-input rotation **708-2** to the motor. The second user-input rotation may comprise the user manually rotating the motor in a second predetermined direction, which causes the motor to generate a second counter EMF **710-2.** The phase relationship in Part A is based on the second counter EMF, and can be measured using the above-mentioned oscilloscopes. As previously mentioned, the second predetermined direction may be opposite to the first predetermined direction. For example, in some embodiments, the first predetermined direction may be a clockwise direction and the second predetermined direction may be a counter clockwise direction. Alternatively, the first predetermined direction may be a counter clockwise direction and the second predetermined direction may be a clockwise direction. The plurality of position sensors (e.g., Hall effect sensors) **716-1, 716-2,** and **716-3** are configured to generate Hall voltage signals that are phase-shifted by 120° when the motor is manually rotated by the user in the second predetermined direction.

Comparing Parts A and B of **FIG. 7,** when the motor is rotated in the second predetermined direction, the relationship between phase A-B and a first Hall voltage signal (measured by position sensor **716-1**) is 180° out of phase. Similarly, the relationship between phase B-C and a second Hall voltage signal (measured by position sensor **716-2**) is 180° out of phase. Likewise, the relationship between phase C-A and a third Hall voltage signal (measured by position sensor **716-3**) is also 180° out of phase. Accordingly, a motor controller can be configured to determine a direction of a user-input rotation (clockwise or counter clockwise), based on the relationship (phase difference) between different phases (A-B, B-C, or C-A) and the corresponding voltage signals generated by a plurality of position sensors.

The plots in **FIG. 7** can also be used to determine the user's degree of rotation of the motor. For example, the signal outputs from the first position sensor and the second position sensor (and/or the third position sensor) can be used to directly decode the rotor position. In some embodiments, each position sensor (e.g., a Hall effect sensor) may change its state every 60 electrical degrees of rotation. The electrical angle is a degree or cycle of electromotive force (EMF) induced in the position sensor. Accordingly, it takes six steps (60 electrical degrees x 6) to complete an electrical cycle. However, one electrical cycle may not correspond to a complete mechanical revolution of the rotor. The number of electrical cycles to be repeated to complete a mechanical rotation is determined by the number of rotor pole pairs. For each rotor pole pair, one electrical cycle is completed. The number of electrical cycles/rotations equals the number of rotor pole pairs.

For example, in a brushless motor having only one pair of poles (North and South rotor poles), 360° of electrical cycle corresponds to 360° of mechanical rotation, and an angle measured in mechanical degrees has the same value in electrical degrees. However, in brushless motors having more than two poles, one electrical cycle is generated per pair of poles per revolution. For example, an eight-pole brushless motor (having four pairs of rotor poles) generates four cycles of voltage in each armature coil per revolution. Accordingly, for an eight-pole brushless motor, each mechanical degree is equivalent to four electrical degrees. The relationship between electrical angle/degree and mechanical angle/degree is given as follows:

$$\text{Number of electrical degrees in a given angle} = p/2 * \text{Number of mechanical degrees in that angle,}$$

where $p$ is the number of magnetic poles of either the rotor or the stator.

A single sinusoidal waveform (using only one Hall sensor) may not be sufficient to provide information about a rotational angle of the motor when a motor has more than two rotor poles, because flux reversal may occur in any direction between any of the rotor poles. To determine the rotational angle for a brushless motor having more than two rotor poles (e.g., eight rotor poles), a plurality of position sensors (e.g., Hall effect sensors) may be used, for example as shown in FIG. 7. In some embodiments, the first sensor **716-1** may be located below a first position of the rotor housing, the second sensor **716-2** may be located below a second position of the rotor housing, and the third sensor **716-3** may be located below a third position of the rotor housing, such that the three position sensors are out of phase with each other. The distance and/or angle between the first, second, and third positions can be predetermined (or known). As an example, the first and second position sensors may be spaced apart by $m$ mechanical degrees, and spaced apart by $\phi$ electrical degrees, $\phi$ may be any angle that is not equal to $\pi.n$, where n is an integer (0, 1, 2, ...). It is noted that if the first and second position sensors are spaced apart by $\pi.n$, the signals from the two sensors would be in-phase, which may not allow the rotational angle to be determined. The above principles also apply to the spacing between the second and third position sensors, and the spacing between the third and first position sensors.

Referring back to **FIG. 3,** the counter EMF is generated without the motor being powered on. Specifically, the motor is powered off when the user manually rotates the motor to select a motor control parameter using the motor controller.

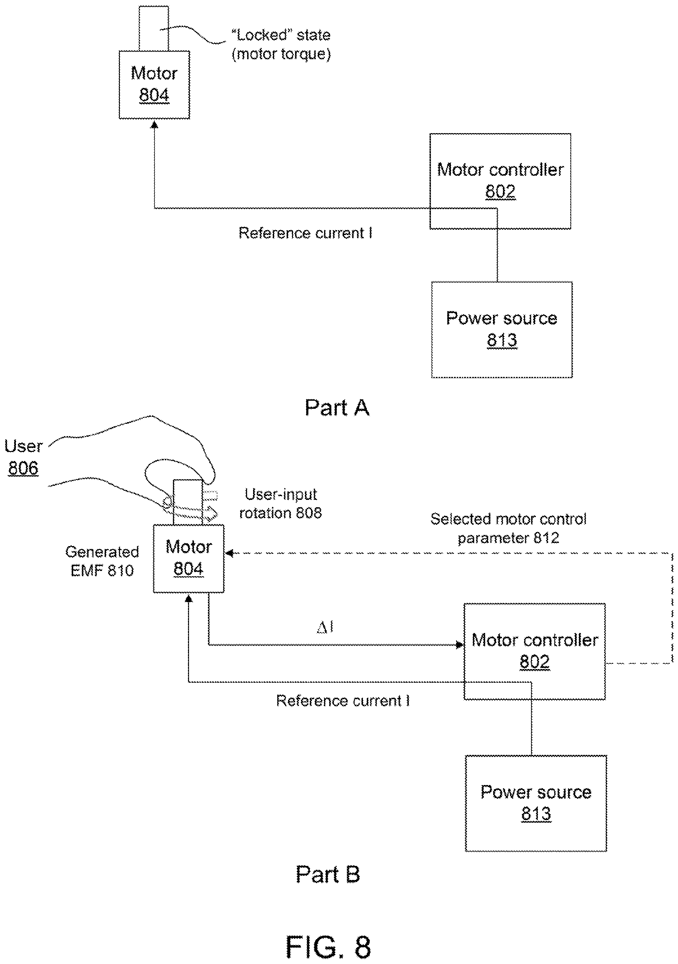

In some other embodiments, a counter EMF can be generated with the motor being powered on, as described with reference to **FIG. 8.** Referring to Part A of **FIG. 8,** a motor controller **802** may be operably coupled to a motor **804.** The motor may be powered on by an electric current provided from the motor controller. The electric current may correspond to a reference current *I*. The reference current I may be a constant electric current that is provided from the motor controller. The electric current may be obtained from a power source **813.** The motor controller may be operably coupled to the power source, and the motor may be electrically connected to the power source via the motor controller. In some embodiments, the power source may be located with the motor controller, or constitute part of the motor controller. In other embodiments, the power source may be provided separately from the motor controller, and located remotely from the motor controller. In some embodiments, both the motor controller and the power source may be onboard a movable object. Alternatively, the motor controller may be onboard the movable object, and the power source may be located remotely from the movable object.

The power source may include a battery. The battery may be integrated with the movable object. Alternatively or in addition, the battery may be a replaceable component that is removably coupled with the movable object. A battery may comprise a lithium battery, or a lithium ion battery. In some embodiments, a battery may comprise a battery assembly (or a battery pack) and may further comprise a plurality of battery cells. While batteries or battery assemblies are described herein, it is to be understood that any alternative power source or medium of storing energy, such as supercapacitors may be equally applicable to the present disclosure. In some cases, the battery may further include a power controller. The power controller may in some instances be a microcontroller located on board the battery, e.g. as part of an intelligent battery system. In some instances, parameters regarding the battery (e.g., voltage, voltage drop, current, temperature, remaining capacity) may be sensed with aid of the power controller. Alternatively, the battery parameters may be estimated using a separate sensing means (e.g. voltmeter, multi-meter, battery level detector, etc).

Referring to Part A of **FIG. 8,** the motor may not be configured to actively (or freely) rotate when the reference current I is provided to the motor. For example, the motor may be in a "locked" state when the reference current *I* is provided to the motor. The reference current *I* may be configured to generate a torque in the motor for effecting the "locked" state of the motor. The motor may be only rotatable by an external force when the motor is in the locked state. The external force may be provided by a user's manual rotation of the motor. When the motor is in the "locked" state, the user may experience an amount of resistance when the user tries to manually rotate the motor.

Referring to Part B of **FIG. 8,** a user **806** may provide a user-input rotation **808** to the motor, when the motor is being powered on by the reference current *I*. The user-input rotation may comprise the user manually rotating the motor at different speeds, for different number of turns, and/or to different rotor positions. The user-input rotation **808** can cause the motor to generate a counter EMF **810,** as previously described. An electrical signal may be transmitted from a phase end of the motor to a port of the motor controller when the user manually rotates the motor. The electrical signal may be indicative of a change in the reference electric current ($\Delta I$) provided to the motor. The change in the reference electric current ($\Delta I$) may be caused by the counter EMF that is generated by the user-input rotation, and may be associated with (i) a degree of rotation and/or (ii) number of turns of the motor. An angle of rotation of the rotor can be determined from a phase change in the reference current. As previously described, the motor controller can be configured to select a motor control parameter from a plurality of motor control parameters based on the electrical signal. The motor controller may be further configured to control operation of the motor based on the selected motor control parameter **812,** as indicated by the dotted line from the motor controller to the motor.

In the example of **FIG. 8,** the motor **804** may be a three-phase brushless motor. Each of the three phases A, B, and C may have an upper switch and a lower switch. The switches may include transistors such as MOSFETs. The upper switch may be a high side MOSFET and the lower switch may be a low side MOSFET. For example, A+ may indicate that the Phase A high side MOSFET is closed (ON), A- may indicate that the Phase A low side MOSFET is closed (ON), B+ may indicate that the Phase B high side MOSFET is closed (ON), B- may indicate that the Phase B low side MOSFET is closed (ON), C+ may indicate that the Phase C high side MOSFET is closed (ON), and C- may indicate that the Phase C low side MOSFET is closed (ON).

The reference current I may be a constant current that is provided from the motor controller to the motor. The motor controller may be configured to turn on different switches, and provide power to the motor through the switches. For example, the motor controller may be configured to set the upper switches of any two phases among the three phases, and the lower switch of the remaining one phase, to an ON state (e.g., A+ / B+ / C-). Alternatively, the motor controller may be configured to set the lower switches of any two phases among the three phases, and the upper switch of the remaining one phase, to an ON state (e.g., A+ / B- / C-).

The motor controller may be configured to detect the currents in the three phases of the motor. The respective currents in the three phases have stable amplitudes in the absence of the user-input rotation. For example, when the lower switches of phases B and C and the upper switch of phase A are set to ON, and the user is not rotating the motor, the relationship between the currents in the phases may be given as follows:

$$I_a = -I_b/2 = -I_c/2$$

When the user manually rotates the motor, the counter EMF **810** will be generated by the motor. The counter EMF can cause a change in the amplitudes of the current, as shown by the motor voltage equation:

$$V = R_s I + L_s \frac{dI}{dt} + E_s$$

$$E_s = K\omega$$

where $V$ is the motor voltage, $I$ is the electrical current flowing through the motor, $R_s$ is an internal resistance of the motor, $L_s$ is an inductance of the motor, $E_s$ is the counter EMF of the motor, $K$ is the counter EMF constant of the motor, and $\omega$ is the user-input rotating velocity of the motor.

When the reference current $I$ (a constant current) is provided to the three-phase motor, a locking force is generated in the motor. The locking force can cause a stator of the motor to be at an angle corresponding to the stator's current "electric period". When the user manually rotates the motor to change from one electric period to another electric period, the user can feel the locking force in his/her hand. The reference current $I$ can change when the user-input rotation is applied to the motor. Assuming $p$ pairs of poles are provided in the motor, the user can feel $p$ number of "steps" if the user rotates the motor 360°, that is, $p$ electric periods. The motor controller, which is operably coupled to the motor, can be configured to detect the change in the reference current ($\Delta I$), and determine a number of "steps" that the user rotates the motor.

In some embodiments, different motor control parameters can be associated with different changes in the reference current (different $\Delta I$), as well as the corresponding number of "steps" in the user-input rotations. For example, a first motor control parameter can be associated with $\Delta I_1$ corresponding to $N_1$ number of "steps". Similarly, a second motor control parameter can be associated with $\Delta I_2$ corresponding to $N_2$ number of "steps". The first and second control parameters are different. Likewise, $\Delta I_1$ and $\Delta I_2$, and $N_1$ and $N_2$, are also different. Accordingly, the motor controller can be configured to select different control parameters, based on the number of "steps" in the user-input rotation of the motor.

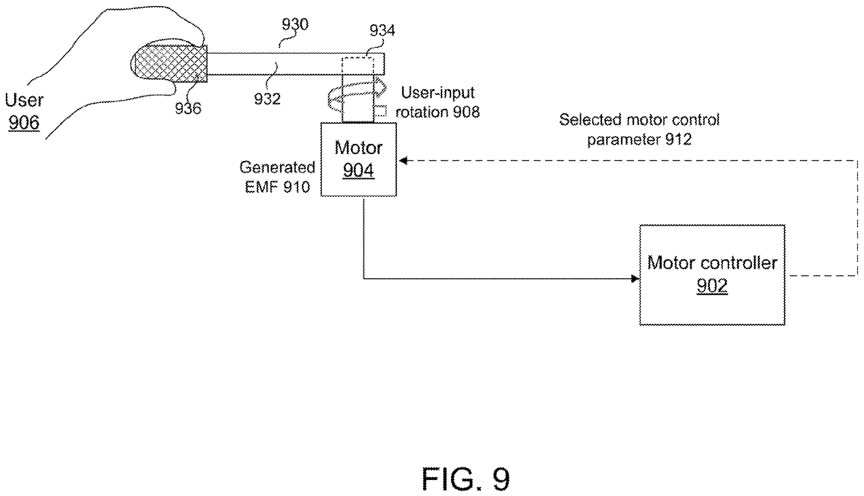

In the examples of **FIGs. 3** through **8,** the user-input rotation is provided by a user manually turning the motor rotor by hand. In some instances, the user-input rotation can be provided by a user manually turning the motor rotor using a tool. For example, as shown in **FIG. 9,** a user **906** can use a tool **930** to manually rotate the rotor of motor **904.** In some embodiments, the tool may comprise an arm **932,** a handle **936,** and a coupling end **934.** The coupling end may be located at a distal end of the arm. The coupling end may be configured to be releasably coupled to the motor rotor. In some embodiments, the coupling end may include a socket that is configured to receive the motor rotor. The rotor may be locked in place in the socket using a locking mechanism (not shown). The locking mechanism may include, for example a bolt or an elastic element (spring). The rotor may be locked in place, so that the rotor turns with the tool when the user rotates the tool. The tool can provide a larger turning force via the moment arm, thus making it easier for the user to rotate the motor. The user-input rotation **908** can cause the motor to generate a counter EMF **910** that is transmitted to a motor controller **902.** As previously described, the motor controller can be configured to select a motor control parameter from a plurality of motor control parameters, based on an electrical signal indicative of the counter EMF.

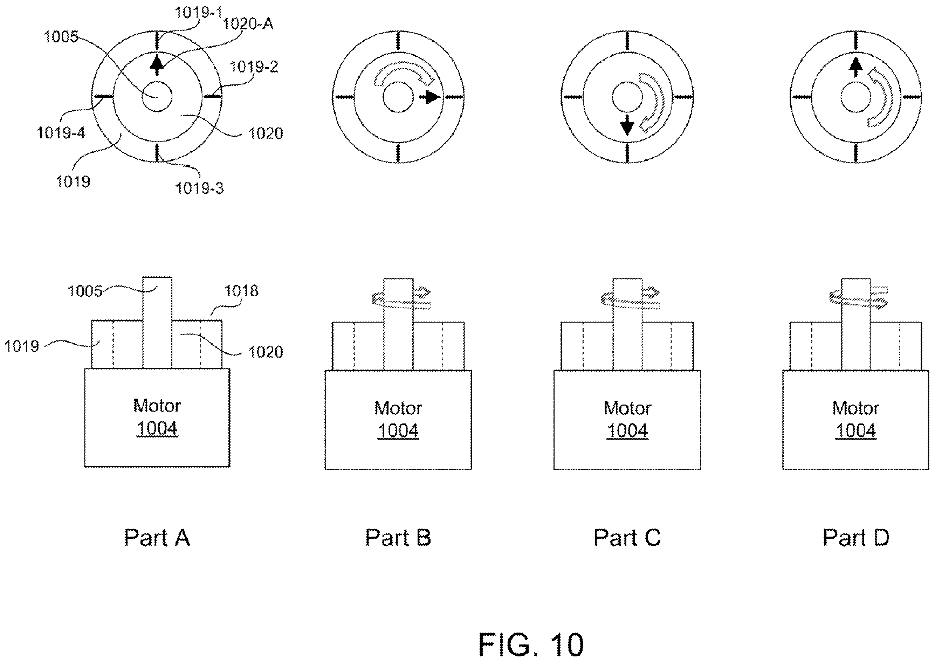

In some embodiments, a user may want to know how many turns of the motor have been completed. **FIG. 10** illustrates a gauge that allows the user to turn the motor in a calibrated manner, in accordance with some embodiments. A gauge **1018** may comprise a sleeve **1019** and a rotating ring **1020.** The rotating ring may be located within the sleeve, and rotatably coupled to the sleeve via one or more bearings. The rotating ring can be configured to rotate within and relative to the sleeve, in either a clockwise direction or a counter clockwise direction.

The gauge **1018** may be operably coupled to a motor **1004.** For example, the rotating ring may comprise a through-hole for receiving the motor rotor **1005.** The rotor may be locked in place within the rotating ring using a locking mechanism (not shown). The locking mechanism may include, for example a bolt or an elastic element (spring). The rotor may be locked in place, so that the rotor can turn with the rotating ring. The sleeve may be mounted onto the motor. For example, the sleeve can be rigidly attached to the motor housing. Accordingly, when the user rotates the motor rotor, the rotating ring can turn with the rotor while the sleeve remains stationary. The relative motion (rotation) between the rotating ring and the sleeve, coupled with the use of markers on the rotating ring and the sleeve, allows a user to see how many turns of the motor have been completed.

As shown in Part A of **FIG. 10,** the sleeve may include a plurality of markers. The markers may be etched on a top portion and/or side portion of the sleeve. In some embodiments, the markers may include a first marker **1019-1,** a second marker **1019-2,** a third marker **1019-3,** and a fourth marker **1019-4** located at different quadrants of the sleeve. The rotating ring may include a rotation marker **1020-A.** In some instances, the rotation marker may be provided in the shape of an arrow, although any shape may be contemplated. When the gauge is first attached to the motor, the rotation marker may be in a reference position. For example, as shown in Part A, the rotation marker may be aligned with the first marker.

In Part B, a user may turn the motor by ¼ turn (90°) in a clockwise direction. Accordingly, the rotating ring is rotated by ¼ turn (90°) in a clockwise direction relative to the sleeve. When the rotation marker is aligned with the second marker, the user may know that a ¼ turn in the clockwise direction has been completed. Similarly, in Part C, the user may turn the motor by another ¼ turn (90°) in the clockwise direction. When the rotation marker is aligned with the third marker, the user may know that a ½ turn in the clockwise direction has been completed.

The user can rotate the motor in either a clockwise direction or a counter clockwise direction. As shown in Part D, the user may turn the motor by ½ turn in the counter clockwise direction. When the rotation marker is aligned with the first marker, the user may know that a ½ turn in the counter clockwise direction has been completed.

Accordingly, the user can use the gauge in **FIG. 10** determine the number of turns of the motor. Different motor control parameters can be associated with different number of turns of the motor. For example, in some embodiments, a first motor control parameter can be associated with a ½ turn in a clockwise direction, a second motor control parameter can be associated with 1 turn in a counter clockwise direction, a third motor control parameter can be associated with 2 turns in the clockwise direction, and so forth. The user can input different numbers of turns to the motor, to select different motor control parameters via a motor controller operably coupled to the motor. For example, when the user inputs a ½ turn in the clockwise direction, the motor controller may be configured to select the first motor control parameter from a plurality of motor control parameters. Likewise, when the user inputs 2 turns in the clockwise direction, the motor controller may be configured to select the third motor control parameter from the plurality of motor control parameters.

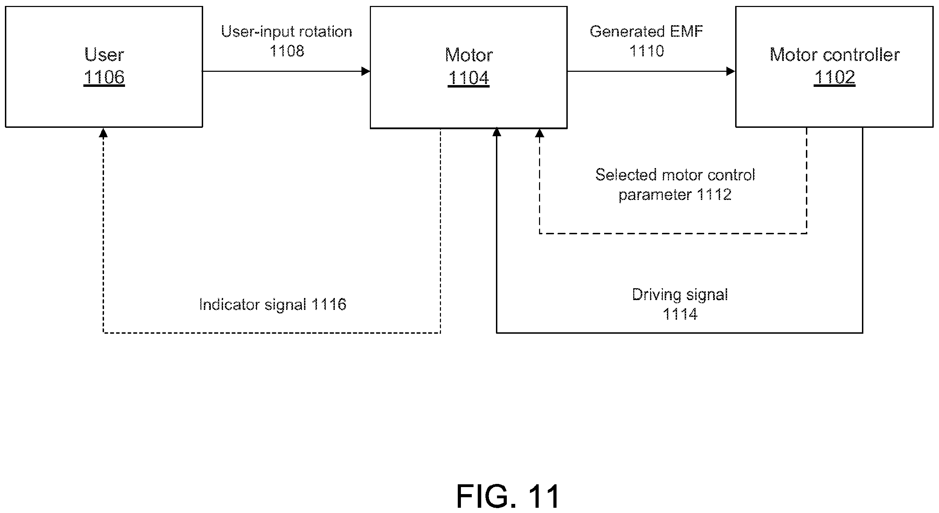

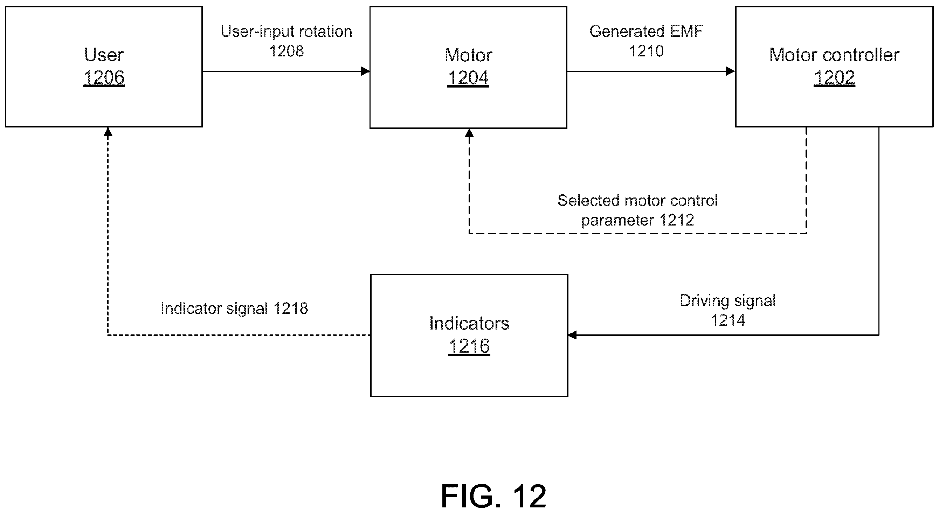

In some embodiments, sensory feedback may be provided to alert a user when a motor controller selects a motor control parameter from a plurality of motor control parameters. The sensory feedback may include an audio effect, a motion effect, and/or a visual effect, as described below with reference to **FIGs. 11** and **12.**

The embodiment of **FIG. 11** may be similar to the embodiment of **FIG. 3** except for the following differences. In **FIG. 11,** a motor controller **1102** may be configured to generate a driving signal **1114** when a motor control parameter **1112** has been selected from a plurality of motor control parameters. As previously described, the motor control parameter may be selected based on an electrical signal indicative of a counter EMF **1110**. The counter EMF may be generated by a motor **1104** when a user **1106** provides a user-input rotation **1108** to the motor.

The motor controller **1102** may be configured to send the driving signal **1114** to the motor, to drive the motor to generate an indicator signal **1116**. The indicator signal may correspond to sensory feedback that is provided to the user, to alert the user that the motor control parameter **1112** has been selected.

In some embodiments, the indicator signal may include an audio signal. For example, the driving signal may drive the motor to generate the audio signal when a motor control parameter is selected from the plurality of different motor control parameters. The audio signal may exhibit an audio effect that is audible to the user. The motor can be driven to emit sounds of a same frequency or different frequencies. The audio signal can also include the motor emitting sounds having any temporal pattern. For example, the audio signal may comprise a predetermined sequence of sounds at a same time interval or different time intervals. The audio signal can be generated for a predetermined length of time. In some cases, the audio signal may comprise a sequence of short beeping sounds generated by the motor. The motor controller can drive the motor to generate different audio signals when different motor control parameters are selected.

In some embodiments, the indicator signal may include a motor vibration signal. For example, the driving signal may drive the motor to generate the motor vibration signal when a motor control parameter is selected from the plurality of different motor control parameters. The motor vibration signal can be a type of motion effect. The effect of the motor vibration signal can be observed and/or felt by the user. In some instances, the motor vibration signal can provide tactile sensory feedback to the user when the user feels the motor vibration. The motor can be driven to vibrate at a same frequency or different frequencies. The motor vibration signal can include motor vibrations in any temporal pattern. For example, the motor vibration signal may comprise a predetermined sequence of motor vibrations at a same time interval or different time intervals. The motor vibration signal can be generated for a predetermined length of time. The motor controller can drive the motor to generate different motor vibration signals when different motor control parameters are selected.

In some embodiments, the indicator signal may include a motor rotation signal. For example, the driving signal may drive the motor to generate the motor rotation signal when a motor control parameter is selected from the plurality of different motor control parameters. The motor rotation signal can be a type of motion effect. The motor rotation signal can be observed by the user. The motor can be driven to rotate for a predetermined number of turns, in a predetermined direction, and/or to a predetermined position. For example, the motor can be driven to rotate 180 degrees (1/2 turn), 360 degrees (1 turn), 720 degrees (2 turns), or any rotational angle, in a clockwise or counter clockwise direction, or any combination thereof. The motor rotation signal can include motor rotations in any temporal pattern. For example, the motor rotation signal may comprise a predetermined sequence of motor rotations at a same time interval or different time intervals. The motor rotation signal can be generated for a predetermined length of time. The motor controller can drive the motor to generate different motor rotation signals when different motor control parameters are selected.

In some embodiments, instead of using the motor to provide sensory feedback to the user, the sensory feedback can be provided using one or more indicators that are external to the motor. FIG. 12 illustrates the use of indicators to alert a user that a motor control parameter has been selected, in accordance with some embodiments. The embodiment of **FIG. 12** may be similar to the embodiment of **FIG. 11** except for the following differences. In **FIG. 12,** a motor controller **1202** may be configured to transmit a driving signal **1214** to one or more indicators **1216** when a motor control parameter **1212** has been selected from a plurality of motor control parameters. As previously described, the motor control parameter may be selected based on an electrical signal indicative of a counter EMF **1210.** The counter EMF may be generated by a motor **1204** when a user **1206** provides a user-input rotation **1208** to the motor.

The motor controller **1202** may be configured to send the driving signal to the indicators **1216,** to drive the indicators to generate an indicator signal **1218.** The indicator signal may correspond to sensory feedback that is provided to the user, to alert the user that the motor control parameter **1212** has been selected.

The indicators **1216** may include light-emitting elements and/or acoustic elements. The light-emitting elements may include an LED, incandescent light, laser, or any type of light source. The acoustic elements may include speakers that are configured to emit sounds of a same frequency or different frequencies. One or more indicators may be located onboard a movable object comprising the motor controller and the motor. Alternatively, one or more indicators may be located remotely from the movable object, motor controller, and/or the motor.

In some embodiments, the indicator signal may include a visual signal. For example, the driving signal may drive the light-emitting elements to generate the visual signal when a motor control parameter is selected from the plurality of different motor control parameters. The visual signal can be visually discernible to the naked eye. The visual signal may be visible to a user located remotely from the movable object, the motor controller, and/or the motor. In some embodiments, the light-emitting elements can be driven to emit light of a same color (particular wavelength) or different colors (a combination of different wavelengths of light). The visual signal can include light emission having any temporal pattern. For example, the visual signal may include a predetermined sequence of light flashes at a same time interval or at different time intervals. In some cases, the light-emitting elements may be configured to emit light towards the user, or towards a predetermined target. The visual signal can be generated for a predetermined length of time. In some cases, the visual signal may comprise a sequence of short flashes generated by the light-emitting elements. The motor controller can drive the light-emitting elements to generate different visual signals when different motor control parameters are selected.

In some embodiments, the visual signal can include light emitted in any spatial pattern. For example, the pattern may include a laser spot, or an array of laser spots. The laser can have modulated data. In some cases, the pattern may display an image, a symbol, or can be any combination of colored patterns. Each pattern may be visually distinguishable from the other.

In some embodiments, the indicator signal may include an audio signal. For example, the driving signal may drive the acoustic elements to generate the audio signal when a motor control parameter is selected from the plurality of different motor control parameters. The audio signal can be audible to a user. In some cases, the audio signal may be audible to a user located remotely from the movable object, the motor controller, and/or the motor. The acoustic elements may include speakers that can be driven to emit sounds of a same frequency or different frequencies. The audio signal can include sound emissions having any temporal pattern. For example, the audio signal may comprise a predetermined sequence of sounds at a same time interval or different time intervals. In some embodiments, the speakers can be driven to emit the audio signal in an omnidirectional manner. Alternatively, the speakers can be driven to emit the audio signal primarily in a single direction, two directions, or any number of multiple directions. In some cases, the speakers can be driven to emit the audio signal directed towards the user, or towards a predetermined target.

The audio signal may dominate over background noise generated by the movable object. For example, an amplitude of the audio signal produced by the acoustic elements may be substantially greater than an amplitude of the background noise. The background noise may include sounds coming from a carrier, motor, camera, or any other noise-producing component of the movable object. The audio signal can be generated for a predetermined length of time. In some cases, the audio signal may comprise a sequence of short beeping sounds generated by the acoustic elements. The motor controller can drive the acoustic elements to generate different audio signals when different motor control parameters are selected.

In some instances, the motor controller may not select a motor control parameter from a plurality of motor control parameters, if an electrical signal generated by a user-input rotation to the motor fails to match any of the predefined electrical signals associated with the plurality of motor control parameters. This can happen when a user fails to rotate the motor in a predefined sequence. For example, the user may miss a turn of the motor, rotate the motor in a wrong direction, rotate the motor at an incorrect speed, and/or rotate the motor to an incorrect position. Accordingly, different indicator signals can be generated to alert the user whether a motor control parameter is successfully selected, or whether the motor control parameter is not successfully selected. For example, in some embodiments, the motor controller may be configured to generate a first driving signal for driving the motor (or indicators) to generate a first indicator signal when the motor control parameter is successfully selected. Conversely, the motor controller may be configured to generate a second driving signal for driving the motor (or indicators) to generate a second indicator signal when the motor control parameter is not successfully selected. The first indicator signal can be different from the second indicator signal. The first indicator signal is used to alert the user that the motor control parameter has been successfully selected. Conversely, the second indicator signal is used to alert the user that the motor control parameter has not been successfully selected. The first indicator signal and the second indicator signal can be selected from a group consisting of: (1) audio signals, (2) visual signals, (3) vibration signals, and (4) motor rotational signals. As an example, in some embodiments, the motor controller can drive the motor to rotate 1 full turn (360°) when a motor control parameter is successfully selected. Conversely, when the motor control parameter is not successfully selected, the motor controller can drive the motor to rotate back and forth to indicate failure.

The table below shows examples of (1) different user inputs to a motor, (2) corresponding motor control parameters to be selected/set, and (3) sensory feedback to alert a user whether a motor control parameter has been successfully selected, or has not been successfully selected. The sensory feedback can comprise, for example audio signals generated by the motor as described elsewhere herein.

| User input to motor | Corresponding motor control parameter to be selected/set | Audio signals (feedback) from motor |
|---|---|---|
| Rotating in a clockwise forward direction; One (1) turn | Set a rotating direction as "forward" | Setting Successful: Di---(long beep, Is) <br> Setting failed: Di-Di-Di (Rapid intermittent beep, lasting Is) |
| Rotating in a clockwise forward direction; Two (2) turns | Set a medium motor timing (or normal motor timing) | Setting Successful: Di---(long beep, Is) <br> Setting failed: Di-Di-Di (Rapid intermittent beep, lasting 3s) |
| Rotating in a clockwise forward direction; Three (3) turns | Setting a high motor timing (or advanced motor timing) | Setting Successful: Di---(long beep, Is) <br> Setting failed: Di-Di-Di (Rapid intermittent beep, lasting 4s) |
| Rotating in a counter clockwise reverse direction; One (1) turn | Setting a rotating direction as "reverse" | Setting Successful: Di---(long beep, Is) <br> Setting failed: Di-Di-Di (Rapid intermittent beep, lasting 2s) |
| Rotating in a counter clockwise reverse direction; Two (1) turns | Setting active deceleration ON | Setting Successful: Di---(long beep, Is) <br> Setting failed: Di-Di-Di (Rapid intermittent beep, lasting 5s) |
| Rotating in a counter clockwise reverse direction; Three (3) turns | Setting active deceleration OFF | Setting Successful: Di---(long beep, Is) <br> Setting failed: Di-Di-Di (Rapid intermittent beep, lasting 6s) |

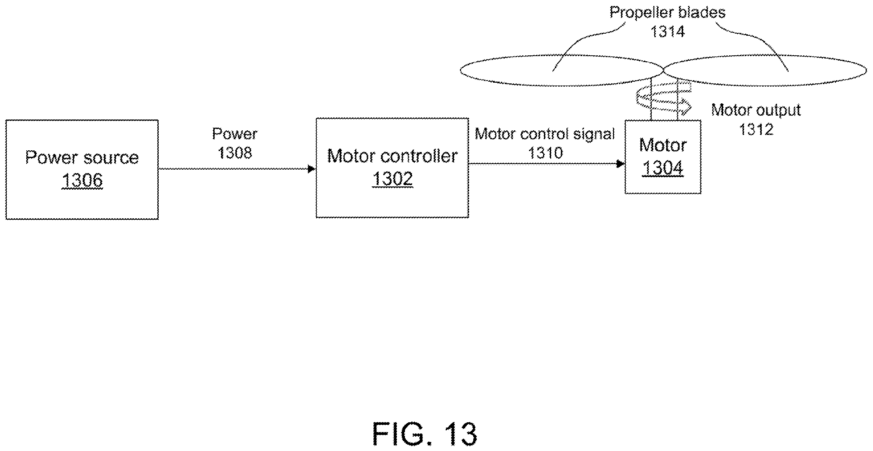

FIG. 13 illustrates a system for controlling a propulsion system based on a selected motor control parameter, in accordance with some embodiments. In FIG. 13, a motor controller 1302 may have selected a motor control parameter, in accordance with any of the embodiments described elsewhere herein. For example, the motor control parameter may be selected from a plurality of motor control parameters based on an electrical signal indicative of a counter EMF. The counter EMF can be generated by a user-input rotation to a motor 1304 when the motor is powered off, or when a constant reference electric current is provided to the motor.

In some alternative embodiments, the counter EMF can be generated by a user-input rotation to another motor that is different from motor 1304. For example, another different motor can be used to program the motor controller (i.e., select and/or adjust a motor control parameter). After the motor control parameter has been selected and/or adjusted, the motor controller may be configured to control the motor 1304. In other words, one motor may be used for programming, and another motor may be used for generating an actual propulsion force.

In some instances, after a motor control parameter has been selected, a user may assemble one or more propeller blades 1314 onto the motor to form a propulsion system. The propulsion system may be provided on a movable object, and can be controlled by the motor controller to generate a lift force to effect motion (e.g., flight) of the movable object.

The propulsion system can be powered by a power source **1306** onboard the movable object. The motor controller may be operably coupled to the power source, and configured to regulate power **1308** that is provided from the power source to the propulsion system. The motor controller may be configured to transmit a motor control signal **1310** to the motor. The motor control signal may be based on the motor control parameter that has been selected, and may comprise instructions for regulating the power to the motor. The motor controller can be configured to control the motor to output a propulsion force based on the selected motor control parameter. In some embodiments, the movable object may be an unmanned aerial vehicle (UAV), and the propulsion system may be located on the UAV. The motor can be configured to output the propulsion force to power flight of the UAV. The motor controller can be, for example an electronic speed control (ESC) module onboard the UAV.

The motor controller can be configured to control the motor based on one or more different motor control parameters. As previously described, the different motor control parameters can comprise instructions for controlling: (i) direction of rotation, (ii) rotation timing, (iii) acceleration, (iv) deceleration, (v) normal phase-change timing, (vi) advanced phase-change timing, and/or (vii) voluntary deceleration of the motor, when the motor is being operated to output a propulsion force. The direction of rotation can comprise a clockwise direction or a counterclockwise direction of rotation of the motor. The rotation timing, acceleration, and deceleration respectively can comprise one or more rotation timings, one or more acceleration settings, and one or more decelecration settings associated with one or more operational modes. In some instances, the operational modes may comprise a normal mode and an advanced mode. The advanced mode can provide a higher acceleration force, a higher deceleration force (braking power), and/or a faster rotation timing compared to the normal mode.

The various embodiments of the invention described elsewhere herein can enable a user to select and/or adjust one or more motor control parameters when the user is out-field or on-site, without requiring the use of a computing device or a dedicated motor controller programming card. This can enhance the mobility of the user, as well as the portability of a movable object comprising the motor and motor controller. Additionally, the versatility and utilization of the movable object can be improved, since a user can easily select different motor control parameters and operate the movable object based on different selected motor control parameters via the motor controller.

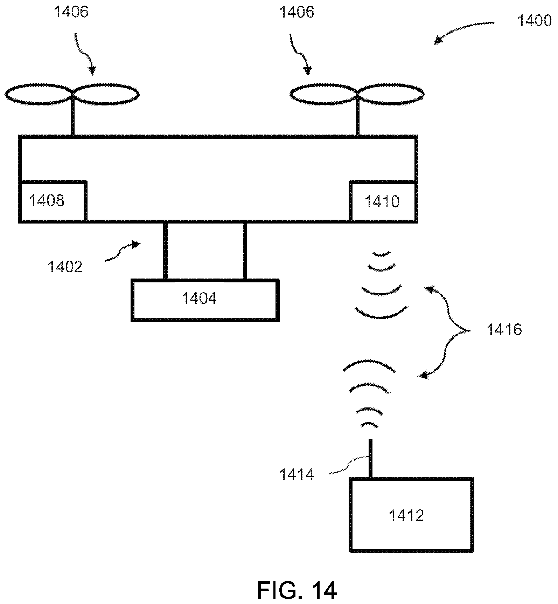

FIG. 14 illustrates a movable object **1400** including a carrier **1402** and a payload **1404,** in accordance with embodiments. Although the movable object **1400** is depicted as an aircraft, this depiction is not intended to be limiting, and any suitable type of movable object can be used, as previously described herein. One of skill in the art would appreciate that any of the embodiments described herein in the context of aircraft systems can be applied to any suitable movable object (e.g., an UAV). In some instances, the payload **1404** may be provided on the movable object **1400** without requiring the carrier **1402.** The movable object **1400** may include propulsion mechanisms **1406,** a sensing system **1408,** and a communication system **1410.**

The propulsion mechanisms **1406** can include one or more of rotors, propellers, blades, engines, motors, wheels, axles, magnets, or nozzles, as previously described. For example, the propulsion mechanisms **1406** may be self-tightening rotors, rotor assemblies, or other rotary propulsion units, as disclosed elsewhere herein. The movable object may have one or more, two or more, three or more, or four or more propulsion mechanisms. The propulsion mechanisms may all be of the same type. Alternatively, one or more propulsion mechanisms can be different types of propulsion mechanisms. The propulsion mechanisms **1406** can be mounted on the movable object **1400** using any suitable means, such as a support element (e.g., a drive shaft) as described elsewhere herein. The propulsion mechanisms **1406** can be mounted on any suitable portion of the movable object **1400,** such on the top, bottom, front, back, sides, or suitable combinations thereof.

In some embodiments, the propulsion mechanisms **1406** can enable the movable object **1400** to take off vertically from a surface or land vertically on a surface without requiring any horizontal movement of the movable object **1400** (e.g., without traveling down a runway). Optionally, the propulsion mechanisms **1406** can be operable to permit the movable object **1400** to hover in the air at a specified position and/or orientation. One or more of the propulsion mechanisms **1400** may be controlled independently of the other propulsion mechanisms. Alternatively, the propulsion mechanisms **1400** can be configured to be controlled simultaneously. For example, the movable object **1400** can have multiple horizontally oriented rotors that can provide lift and/or thrust to the movable object. The multiple horizontally oriented rotors can be actuated to provide vertical takeoff, vertical landing, and hovering capabilities to the movable object **1400.** In some embodiments, one or more of the horizontally oriented rotors may spin in a clockwise direction, while one or more of the horizontally rotors may spin in a counterclockwise direction. For example, the number of clockwise rotors may be equal to the number of counterclockwise rotors. The rotation rate of each of the horizontally oriented rotors can be varied independently in order to control the lift and/or thrust produced by each rotor, and thereby adjust the spatial disposition, velocity, and/or acceleration of the movable object **1400** (e.g., with respect to up to three degrees of translation and up to three degrees of rotation).

The sensing system 1008 can include one or more sensors that may sense the spatial disposition, velocity, and/or acceleration of the movable object **1400** (e.g., with respect to up to three degrees of translation and up to three degrees of rotation). The one or more sensors can include global positioning system (GPS) sensors, motion sensors, inertial sensors, proximity sensors, or image sensors. The sensing data provided by the sensing system **1408** can be used to control the spatial disposition, velocity, and/or orientation of the movable object **1400** (e.g., using a suitable processing unit and/or control module, as described below). Alternatively, the sensing system **1408** can be used to provide data regarding the environment surrounding the movable object, such as weather conditions, proximity to potential obstacles, location of geographical features, location of manmade structures, and the like.

The communication system **1410** enables communication with terminal **1412** having a communication system **1414** via wireless signals **1416**. The communication systems **1410, 1414** may include any number of transmitters, receivers, and/or transceivers suitable for wireless communication. The communication may be one-way communication, such that data can be transmitted in only one direction. For example, one-way communication may involve only the movable object **1400** transmitting data to the terminal **1412,** or vice-versa. The data may be transmitted from one or more transmitters of the communication system **1410** to one or more receivers of the communication system **1412,** or vice-versa. Alternatively, the communication may be two-way communication, such that data can be transmitted in both directions between the movable object **1400** and the terminal **1412.** The two-way communication can involve transmitting data from one or more transmitters of the communication system 1010 to one or more receivers of the communication system **1414,** and vice-versa.

In some embodiments, the terminal **1412** can provide control data to one or more of the movable object **1400,** carrier **1402,** and payload **1404** and receive information from one or more of the movable object **1400,** carrier **1402,** and payload **1404** (e.g., position and/or motion information of the movable object, carrier or payload; data sensed by the payload such as image data captured by a payload camera). In some instances, control data from the terminal may include instructions for relative positions, movements, actuations, or controls of the movable object, carrier and/or payload. For example, the control data may result in a modification of the location and/or orientation of the movable object (e.g., via control of the propulsion mechanisms **1406**), or a movement of the payload with respect to the movable object (e.g., via control of the carrier **1402**). The control data from the terminal may result in control of the payload, such as control of the operation of a camera or other image capturing device (e.g., taking still or moving pictures, zooming in or out, turning on or off, switching imaging modes, change image resolution, changing focus, changing depth of field, changing exposure time, changing viewing angle or field of view). In some instances, the communications from the movable object, carrier and/or payload may include information from one or more sensors (e.g., of the sensing system **1408** or of the payload **1404**). The communications may include sensed information from one or more different types of sensors (e.g., GPS sensors, motion sensors, inertial sensor, proximity sensors, or image sensors). Such information may pertain to the position (e.g., location, orientation), movement, or acceleration of the movable object, carrier and/or payload. Such information from a payload may include data captured by the payload or a sensed state of the payload. The control data provided transmitted by the terminal **1412** can be configured to control a state of one or more of the movable object **1400,** carrier **1402,** or payload **1404.** Alternatively or in combination, the carrier **1402** and payload **1404** can also each include a communication module configured to communicate with terminal **1412,** such that the terminal can communicate with and control each of the movable object **1400,** carrier **1402,** and payload **1404** independently.

In some embodiments, the movable object **1400** can be configured to communicate with another remote device in addition to the terminal **1412,** or instead of the terminal **1412.** The terminal **1412** may also be configured to communicate with another remote device as well as the movable object **1400.** For example, the movable object **1400** and/or terminal **1412** may communicate with another movable object, or a carrier or payload of another movable object. When desired, the remote device may be a second terminal or other computing device (e.g., computer, laptop, tablet, smartphone, or other mobile device). The remote device can be configured to transmit data to the movable object **1400,** receive data from the movable object **1400,** transmit data to the terminal **1412,** and/or receive data from the terminal **1412.** Optionally, the remote device can be connected to the Internet or other telecommunications network, such that data received from the movable object **1400** and/or terminal **1412** can be uploaded to a website or server.

In some embodiments, a system for controlling a movable object may be provided in accordance with embodiments. The system can be used in combination with any suitable embodiment of the systems, devices, and methods disclosed herein. The system can include a sensing module, processing unit, non-transitory computer readable medium, control module, and communication module.

The sensing module can utilize different types of sensors that collect information relating to the movable objects in different ways. Different types of sensors may sense different types of signals or signals from different sources. For example, the sensors can include inertial sensors, GPS sensors, proximity sensors (e.g., lidar), or vision/image sensors (e.g., a camera). The sensing module can be operatively coupled to a processing unit having a plurality of processors. In some embodiments, the sensing module can be operatively coupled to a transmission module (e.g., a Wi-Fi image transmission module) configured to directly transmit sensing data to a suitable external device or system. For example, the transmission module can be used to transmit images captured by a camera of the sensing module to a remote terminal.

The processing unit can have one or more processors, such as a programmable processor (e.g., a central processing unit (CPU)). The processing unit can be operatively coupled to a non-transitory computer readable medium. The non-transitory computer readable medium can store logic, code, and/or program instructions executable by the processing unit for performing one or more steps. The non-transitory computer readable medium can include one or more memory units (e.g., removable media or external storage such as an SD card or random access memory (RAM)). In some embodiments, data from the sensing module can be directly conveyed to and stored within the memory units of the non-transitory computer readable medium. The memory units of the non-transitory computer readable medium can store logic, code and/or program instructions executable by the processing unit to perform any suitable embodiment of the methods described herein. For example, the processing unit can be configured to execute instructions causing one or more processors of the processing unit to analyze sensing data produced by the sensing module. The memory units can store sensing data from the sensing module to be processed by the processing unit. In some embodiments, the memory units of the non-transitory computer readable medium can be used to store the processing results produced by the processing unit.

In some embodiments, the processing unit can be operatively coupled to a control module configured to control a state of the movable object. For example, the control module can be configured to control the propulsion mechanisms of the movable object to adjust the spatial disposition, velocity, and/or acceleration of the movable object with respect to six degrees of freedom. Alternatively or in combination, the control module can control one or more of a state of a carrier, payload, or sensing module.

The processing unit can be operatively coupled to a communication module configured to transmit and/or receive data from one or more external devices (e.g., a terminal, display device, or other remote controller). Any suitable means of communication can be used, such as wired communication or wireless communication. For example, the communication module can utilize one or more of local area networks (LAN), wide area networks (WAN), infrared, radio, WiFi, point-to-point (P2P) networks, telecommunication networks, cloud communication, and the like. Optionally, relay stations, such as towers, satellites, or mobile stations, can be used. Wireless communications can be proximity dependent or proximity independent. In some embodiments, line-of-sight may or may not be required for communications. The communication module can transmit and/or receive one or more of sensing data from the sensing module, processing results produced by the processing unit, predetermined control data, user commands from a terminal or remote controller, and the like.

The components of the system can be arranged in any suitable configuration. For example, one or more of the components of the system can be located on the movable object, carrier, payload, terminal, sensing system, or an additional external device in communication with one or more of the above. In some embodiments, one or more of the plurality of processing units and/or non-transitory computer readable media can be situated at different locations, such as on the movable object, carrier, payload, terminal, sensing module, additional external device in communication with one or more of the above, or suitable combinations thereof, such that any suitable aspect of the processing and/or memory functions performed by the system can occur at one or more of the aforementioned locations.

As used herein A and/or B encompasses one or more of A or B, and combinations thereof such as A and B. It will be understood that although the terms "first," "second," "third" etc. may be used herein to describe various elements, components, regions and/or sections, these elements, components, regions and/or sections should not be limited by these terms. These terms are merely used to distinguish one element, component, region or section from another element, component, region or section. Thus, a first element, component, region or section discussed below could be termed a second element, component, region or section without departing from the teachings of the present invention.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," or "includes" and/or "including," when used in this specification, specify the presence of stated features, regions, integers, steps, operations, elements and/or components, but do not preclude the presence or addition of one or more other features, regions, integers, steps, operations, elements, components and/or groups thereof.

Furthermore, relative terms, such as "lower" or "bottom" and "upper" or "top" may be used herein to describe one element's relationship to other elements as illustrated in the figures. It will be understood that relative terms are intended to encompass different orientations of the elements in addition to the orientation depicted in the figures. For example, if the element in one of the figures is turned over, elements described as being on the "lower" side of other elements would then be oriented on the "upper" side of the other elements. The exemplary term "lower" can, therefore, encompass both an orientation of "lower" and "upper," depending upon the particular orientation of the figure. Similarly, if the element in one of the figures were turned over, elements described as "below" or "beneath" other elements would then be oriented "above" the other elements. The exemplary terms "below" or "beneath" can, therefore, encompass both an orientation of above and below.

While preferred embodiments of the present invention have been shown and described herein, it will be obvious to those skilled in the art that such embodiments are provided by way of example only. Numerous variations, changes, and substitutions will now occur to those skilled in the art without departing from the invention. It should be understood that various alternatives to the embodiments of the invention described herein may be employed in practicing the invention. Numerous different combinations of embodiments described herein are possible, and such combinations are considered part of the present disclosure. In addition, all features discussed in connection with any one embodiment herein can be readily adapted for use in other embodiments herein. It is intended that the following claims define the scope of the invention and that methods and structures within the scope of these claims and their equivalents be covered thereby. Various embodiments have been described. The present invention may also (alternatively) be described by the below numbered aspects 1 to 175

**ASPECTS**

1. A method for operating a motor controller, comprising:

obtaining an electrical signal via a port on the motor controller, wherein said port is configured to be electrically connected to a motor; and

selecting a motor control parameter from a plurality of different motor control parameters based on the electrical signal, wherein the motor controller is configured to control the motor based on the selected motor control parameter.

2. The method of aspect 1, wherein the electrical signal is indicative of a counter electromotive force (EMF) generated by a user input to the motor.
3. The method of aspect 2, wherein the user input comprises a manual rotation of the motor to generate the counter EMF.
4. The method of aspect 3, wherein the counter EMF is generated without the motor being powered on.
5. The method of aspect 3, wherein the counter EMF is generated with the motor being powered on.
6. The method of aspect 5, wherein the motor is powered on by an electric current provided from the motor controller.
7. The method of aspect 1, wherein the electrical signal is generated at a phase end of the motor, and output from the phase end to the port of the motor controller.
8. The method of aspect 1, wherein the electrical signal comprises a plurality of signal waveforms having an amplitude, a frequency, and a phase difference.
9. The method of aspect 8, wherein the plurality of signal waveforms are generated at a plurality of phase ends of the motor, and output from the plurality of phase ends to the port of the motor controller.
10. The method of aspect 9, wherein the plurality of signal waveforms are indicative of a counter electromotive force (EMF) generated by a user input to the motor.
11. The method of aspect 10, wherein the amplitude and the frequency of the plurality of signal waveforms are indicative of a speed of rotation of the motor when the motor is being manually rotated.
12. The method of aspect 10, wherein the phase difference is indicative of a direction of rotation of the motor when the motor is being manually rotated.
13. The method of aspect 10, wherein the phase difference is indicative of an angle of rotation of the motor.
14. The method of aspect 10, further comprising: detecting a variation in the plurality of signal waveforms when the motor is being manually rotated.
15. The method of aspect 14, wherein the variation in the plurality of signal waveforms comprises (i) a change in the amplitude, (ii) a change in the frequency, and/or (iii) a change in the phase difference of the plurality of signal waveforms.
16. The method of aspect 1, wherein the electrical signal is indicative of a change in a reference electric current provided to the motor.
17. The method of aspect 16, wherein the motor is not configured to actively rotate when the reference electric current is provided to the motor.
18. The method of aspect 17, wherein the motor is in a locked state when the reference electric current is provided to the motor.
19. The method of aspect 18, wherein the reference electric current is configured to generate a torque in the motor for effecting the locked state of the motor.
20. The method of aspect 18, wherein the motor is only rotatable by an external force when the motor is in the locked state.
21. The method of aspect 20, wherein the external force is provided by a user's manual rotation of the motor.
22. The method of aspect 16, wherein the reference electric current is a constant electric current that is provided from the motor controller.

23. The method of aspect 16, wherein the change in the reference electric current is caused by a counter electromotive force (EMF) that is generated by a user input to the motor.

24. The method of aspect 23, wherein the user input comprises manual rotation of the motor to generate the counter EMF.

25. The method of aspect 24, wherein the change in the reference electric current is associated with (i) a degree of rotation and/or (ii) number of turns of the motor.

26. The method of aspect 24, wherein an angle of rotation of the rotor is determined from a phase change in the reference electric current.

27. The method of aspect 1, wherein the plurality of different motor control parameters comprise instructions for controlling a (i) a direction of rotation, (ii) a rotation timing, (iii) an acceleration, (iv) a deceleration of the motor, (v) a normal phase-change timing, (vi) an advanced phase-change timing, and/or (vii) a voluntary deceleration of the motor.

28. The method of aspect 27, wherein the selected motor control parameter comprises instructions for controlling any one of (i)-(vii).

29. The method of aspect 27, wherein the direction of rotation comprises a clockwise direction or a counterclockwise direction of rotation.

30. The method of aspect 27, wherein the rotation timing, acceleration, and deceleration respectively comprises one or more rotation timings, one or more acceleration settings, and one or more deceleration settings associated with one or more operational modes.

31. The method of aspect 30, wherein the one or more operational modes comprise a normal mode and an advanced mode.

32. The method of aspect 31, wherein the advanced mode provides a higher acceleration force, a higher deceleration force (braking power), and/or a faster rotation timing compared to the normal mode.

33. The method of aspect 1, wherein the plurality of different motor control parameters are associated with and selected using a plurality of different user inputs.

34. The method of aspect 33, wherein the plurality of different user inputs comprise a user's manual rotation of the motor (1) in different directions and/or (2) for different number of turns.

35. The method of aspect 33, wherein a first user input is used to select a first motor control parameter, and a second user input is used to select a second motor control parameter.

36. The method of aspect 33, wherein the first user input and the second user input are different, and wherein the first motor control parameter and the second motor control parameter are different.

37. The method of aspect 1, wherein the plurality of different motor control parameters are associated with a plurality of different predefined electrical signals.

38. The method of aspect 37, wherein the plurality of different predefined electrical signals are associated with a plurality of predefined user inputs to the motor.

39. The method of aspect 38, wherein the plurality of predefined user inputs comprise (i) a speed of rotation, (ii) a direction of rotation, (iii) a rotation sequence, (iv) a number of rotation turns, and/or (v) a rotational position of the motor.

40. The method of aspect 38, wherein the plurality of different motor control parameters and the plurality of predefined user inputs are provided in a look-up table.

41. The method of aspect 37, further comprising: (1) comparing the electrical signal to the plurality of different predefined electrical signals, and (2) selecting the motor control parameter from the plurality of different motor control parameters when the electrical signal matches a predefined electrical signal that is associated with the selected motor control parameter.

42. The method of aspect 1, wherein selecting the motor control parameter further comprises: activating a mode that allows a value of the motor control parameter to be adjusted.

43. The method of aspect 41, further comprising: adjusting the selected motor control parameter to a desired value after the motor control parameter is selected from the plurality of different motor control parameters.

44. The method of aspect 43, wherein adjusting the selected motor control parameter to the desired value comprises calculating the desired value based on (i) a maximum value of the selected motor control parameter, (ii) a maximum output value of the motor, and (iii) a present output value of the motor.

45. The method of aspect 44, wherein the maximum output value and the present output value of the motor are associated with a speed, acceleration, rotating timing, and/or torque of the motor.

46. The method of aspect 44, wherein the present output value of the motor is obtained from the electrical signal.

47. The method of aspect 44, wherein a ratio of the desired value to the maximum value of the selected motor control parameter is proportional to a ratio of the present output value to the maximum output value of the motor.

48. The method of aspect 1, further comprising: providing a driving signal for driving the motor to generate an audio signal when the motor control parameter is selected from the plurality of different motor control parameters.

49. The method of aspect 48, wherein the audio signal is generated at a predetermined audio frequency and/or for a predetermined length of time.

50. The method of aspect 48, wherein the audio signal comprises a predetermined sequence of sounds spaced apart at a same or different time intervals.

51. The method of aspect 1, further comprising: providing a driving signal for driving a set of visual indicators to generate a visual signal when the motor control parameter is selected from the plurality of different motor control parameters.

52. The method of aspect 51, wherein the set of visual indicators comprise a plurality of lighting elements.

53. The method of aspect 51, wherein the visual signal is generated at a predetermined frequency and/or for a predetermined length of time.

54. The method of aspect 51, wherein the visual signal comprises a predetermined sequence of light flashes spaced apart at a same or different time intervals.

55. The method of aspect 1, further comprising: providing a driving signal for driving the motor to generate a vibration signal when the motor control parameter is selected from the plurality of different motor control parameters.

56. The method of aspect 55, wherein the vibration signal is indicative that the motor control parameter is successfully selected.

57. The method of aspect 55, wherein the motor is configured to vibrate at a predefined frequency and/or for a predetermined length of time.

58. The method of aspect 55, wherein the motor is configured to vibrate in a predefined sequence of vibrations spaced apart at a same or different time intervals.

59. The method of aspect 1, further comprising: providing a driving signal for driving the motor to generate a rotation signal when the motor control parameter is selected from the plurality of different motor control parameters.

60. The method of aspect 59, wherein the rotation signal is indicative that the motor control parameter is successfully selected.

61. The method of aspect 59, wherein the motor is configured to rotate for a predetermined number of turns, in a predetermined direction, and/or to a predetermined position.

62. The method of aspect 59, wherein the motor is configured to rotate in a predefined sequence spaced apart at a same or different time intervals.

63. The method of aspect 1, further comprising: providing a first driving signal for driving the motor to generate a first indicator signal when the motor control parameter is successfully selected.

64. The method of aspect 63, further comprising: providing a second driving signal for driving the motor to generate a second indicator signal when the motor control parameter is not successfully selected.

65. The method of aspect 64, wherein the first indicator signal is different from the second indicator signal.

66. The method of aspect 65, wherein the first indicator signal and the second indicator signal are selected from the group consisting of: (1) audio signals, (2) visual signals, (3) vibration signals, and (4) motor rotational signals.

67. A system for controlling a motor, the system comprising:
a motor controller comprising one or more processors that are individually or collectively configured to:

obtain an electrical signal via a port on the motor controller, wherein said port is configured to be electrically connected to a motor; and

select a motor control parameter from a plurality of different motor control parameters based on the electrical signal, wherein the motor controller is configured to control the motor based on the selected motor control parameter.

68. A non-transitory computer-readable medium storing instructions that, when executed, causes one or more processors to perform a method for operating a motor controller, the method comprising:

obtaining an electrical signal via a port on the motor controller, wherein said port is configured to be electrically connected to a motor; and

selecting a motor control parameter from a plurality of different motor control parameters based on the electrical signal, wherein the motor controller is configured to control the motor based on the selected motor control parameter.

69. A method for controlling a motor, comprising:

operating the motor to generate an electrical signal; and

outputting the electrical signal from the motor to one or more processors, wherein the electrical signal is configured to be used by the one or more processors as an input for selecting a motor control parameter from a plurality of different motor control parameters.

70. The method of aspect 69, wherein operating the motor to generate the electrical signal comprises manually rotating the motor without the motor being powered on.

71. The method of aspect 69, wherein operating the motor to generate the electrical signal comprises manually rotating the motor with the motor being powered on.

72. The method of aspect 71, wherein the motor is powered by an electric current provided via the one or more processors.

73. The method of aspect 69, wherein the electrical signal is generated at a phase end of the motor, and output from the phase end to the one or more processors.

74. The method of aspect 69, wherein the electrical signal is indicative of a counter electromotive force (EMF) generated by the operation of the motor.

75. The method of aspect 69, wherein the plurality of different motor control parameters are associated with a plurality of different ways of controlling the motor.

76. The method of aspect 69, wherein operating the motor to generate the electrical signal comprises manually rotating the motor.

77. The method of aspect 76, wherein the motor is configured to be manually rotated (i) in different directions, (ii) at different speeds, (iii) in different rotation sequences, (iv) having different number of turns, and/or (v) to different rotational positions.

78. The method of aspect 77, wherein each one of the plurality of different motor control parameters is associated with a unique manner of operating the motor based on at least one of (i)-(v).

79. The method of aspect 69, wherein the plurality of different motor control parameters are associated with and selected using a plurality of different user inputs.

80. The method of aspect 79, wherein the plurality of different user inputs comprise a user's manual rotation of the motor (1) in different directions and/or (2) for different number of turns.

81. The method of aspect 79, wherein a first user input is used to select a first motor control parameter, and a second user input is used to select a second motor control parameter.

82. The method of aspect 81, wherein the first user input and the second user input are different, and wherein the first motor control parameter and the second motor control parameter are different.

83. The method of aspect 69, wherein the plurality of different motor control parameters comprise instructions for controlling a (i) a direction of rotation, (ii) a rotation timing, (iii) an acceleration, and/or (iv) a deceleration of the motor, (v) a normal phase-change timing, (vi) an advanced phase-change timing, and/or (vii) a voluntary deceleration of the motor.

84. The method of aspect 83, wherein the selected motor control parameter comprises instructions for controlling any one of (i)-(vii).

85. The method of aspect 83, wherein the direction of rotation comprises a clockwise direction or a counterclockwise direction of rotation.

86. The method of aspect 83, wherein the rotation timing, acceleration, and deceleration respectively comprises one or more rotation timings, one or more acceleration settings, and one or more deceleration settings associated with one or more operational modes.

87. The method of aspect 86, wherein the one or more operational modes comprise a normal mode and an advanced mode.

88. The method of aspect 87, wherein the advanced mode provides a higher acceleration force, a higher deceleration force (braking power), and/or a faster rotation timing compared to the normal mode.

89. The method of aspect 69, wherein the plurality of different motor control parameters are associated with a plurality of different predefined electrical signals.

90. The method of aspect 89, wherein the plurality of different predefined electrical signals are associated with a plurality of predefined user inputs to the motor.

91. The method of aspect 90, wherein the plurality of predefined user inputs comprise (i) a speed of rotation, (ii) a direction of rotation, (iii) a rotation sequence, (iv) a number of rotation turns, and/or (v) a rotational position of the motor.

92. The method of aspect 90, wherein the plurality of different motor control parameters and the plurality of predefined user inputs are provided in a look-up table.

93. The method of aspect 89, further comprising: (1) comparing the electrical signal to the plurality of different predefined electrical signals, and (2) selecting the motor control parameter from the plurality of different motor control parameters when the electrical signal matches a predefined electrical signal that is associated with the selected motor control parameter.

94. The method of aspect 69, wherein selecting the motor control parameter further comprises: activating a mode that allows a value of the motor control parameter to be adjusted.

95. The method of aspect 94, further comprising: adjusting the selected motor control parameter to a desired value after the motor control parameter is selected from the plurality of different motor control parameters.

96. The method of aspect 95, wherein adjusting the selected motor control parameter to the desired value comprises calculating the desired value based on (i) a maximum value of the selected motor control parameter, (ii) a maximum output value of the motor, and (iii) a present output value of the motor.

97. The method of aspect 96, wherein the maximum output value and the present output value of the motor are associated with a speed, acceleration, rotating timing, and/or torque of the motor.

98. The method of aspect 96, wherein the present output value of the motor is obtained from the electrical signal.

99. The method of aspect 96, wherein a ratio of the desired value to the maximum value of the selected motor control parameter is proportional to a ratio of the present output value to the maximum output value of the motor.

100. The method of aspect 69, further comprising: providing a driving signal for driving the motor to generate an audio signal when the motor control parameter is selected from the plurality of different motor control parameters.

101. The method of aspect 100, wherein the audio signal is generated at a predetermined audio frequency and/or for a predetermined length of time.

102. The method of aspect 100, wherein the audio signal comprises a predetermined sequence of sounds spaced apart at a same or different time intervals.

103. The method of aspect 69, further comprising: providing a driving signal for driving a set of visual indicators to generate a visual signal when the motor control parameter is selected from the plurality of different motor control parameters.

104. The method of aspect 103, wherein the set of visual indicators comprise a plurality of lighting elements.

105. The method of aspect 103, wherein the visual signal is generated at a predetermined frequency and/or for a predetermined length of time.

106. The method of aspect 103, wherein the visual signal comprises a predetermined sequence of light flashes spaced apart at a same or different time intervals.

107. The method of aspect 69, further comprising: providing a driving signal for driving the motor to generate a vibration signal when the motor control parameter is selected from the plurality of different motor control parameters.

108. The method of aspect 107, wherein the vibration signal is indicative that the motor control parameter is successfully selected.

109. The method of aspect 107, wherein the motor is configured to vibrate at a predefined frequency and/or for a predetermined length of time.

110. The method of aspect 107, wherein the motor is configured to vibrate in a predefined sequence of vibrations spaced apart at a same or different time intervals.

111. The method of aspect 69, further comprising: providing a driving signal for driving the motor to generate a rotation signal when the motor control parameter is selected from the plurality of different motor control parameters.

112. The method of aspect 111, wherein the rotation signal is indicative that the motor control parameter is successfully selected.

113. The method of aspect 111, wherein the motor is configured to rotate for a predetermined number of turns, in a predetermined direction, and/or to a predetermined position.

114. The method of aspect 111, wherein the motor is configured to rotate in a predefined sequence spaced apart at a same or different time intervals.

115. The method of aspect 69, further comprising: providing a first driving signal for driving the motor to generate a first indicator signal when the motor control parameter is successfully selected.

116. The method of aspect 115, further comprising: providing a second driving signal for driving the motor to generate a second indicator signal when the motor control parameter is not successfully selected.

117. The method of aspect 116, wherein the first indicator signal is different from the second indicator signal.

118. The method of aspect 117, wherein the first indicator signal and the second indicator signal are selected from the group consisting of: (1) audio signals, (2) visual signals, (3) vibration signals, and (4) motor rotational signals.

119. A system comprising:

a motor configured to generate an electrical signal when the motor is operated; and

one or more processors individually or collectively configured to control the motor,

wherein the motor is configured to output the electrical signal to the one or more processors, and wherein the electrical signal is configured to be used by the one or more processors as an input for selecting a motor control parameter from a plurality of different motor control parameters.

120. A method for controlling a propulsion system, the method comprising:

operating a motor when the motor is not outputting a propulsion force; and

selecting a motor control parameter of a motor controller based on the operation of the motor,

wherein the motor controller is configured to control the motor to output the propulsion force based on the selected motor control parameter.

121. The method of aspect 120, wherein the propulsion system is located on an unmanned aerial vehicle (UAV).

122. The method of aspect 120, wherein the motor is configured to output the propulsion force to power flight of the UAV.

123. The method of aspect 120, wherein the motor controller is an electronic speed controller (ESC) onboard the UAV.

124. The method of aspect 120, wherein operating the motor comprises manually rotating the motor without the motor being powered on.

125. The method of aspect 120, wherein operating the motor comprises manually rotating the motor with the motor being powered on.

126. The method of aspect 125, wherein the motor is powered by a constant electric current.

127. The method of aspect 120, wherein the motor is operated to generate an electrical signal when the motor is not outputting the propulsion force.

128. The method of aspect 127, wherein the electrical signal is indicative of a counter electromotive force (EMF) generated by the operation of the motor.

129. The method of aspect 127, wherein the electrical signal is generated at a phase end of the motor, and output from the phase end to a port of the motor controller.

130. The method of aspect 120, wherein the motor control parameter is selected from a plurality of different motor control parameters.

131. The method of aspect 130, wherein the plurality of different motor control parameters are associated with a plurality of different ways of controlling the motor.

132. The method of aspect 127, wherein operating the motor to generate the electrical signal comprises manually rotating the motor.

133. The method of aspect 132, wherein the motor is configured to be manually rotated (i) in different directions, (ii) at different speeds, (iii) in different rotation sequences, (iv) having different number of turns, and/or (v) to different rotational positions.

134. The method of aspect 133, wherein each one of the plurality of different motor control parameters is associated with a unique manner of operating the motor based on at least one of (i)-(v).

135. The method of aspect 134, wherein the plurality of different motor control parameters are associated with and selected using a plurality of different user inputs.

136. The method of aspect 135, wherein the plurality of different user inputs comprise a user's manual rotation of the motor (1) in different directions and/or (2) for different number of turns.

137. The method of aspect 135, wherein a first user input is used to select a first motor control parameter, and a second user input is used to select a second motor control parameter.

138. The method of aspect 137, wherein the first user input and the second user input are different, and wherein the first motor control parameter and the second motor control parameter are different.

139. The method of aspect 130, wherein the plurality of different motor control parameters comprise instructions for controlling a (i) a direction of rotation, (ii) a rotation timing, (iii) an acceleration, (iv) a deceleration of the motor, (v) a normal phase-change timing, (vi) an advanced phase-change timing, and/or (vii) a voluntary deceleration of the motor.

140. The method of aspect 139, wherein the selected motor control parameter comprises instructions for controlling any one of (i)-(vii).

141. The method of aspect 139, wherein the direction of rotation comprises a clockwise direction or a counterclockwise direction of rotation.

142. The method of aspect 139, wherein the rotation timing, acceleration, and deceleration respectively comprises one or more rotation timings, one or more acceleration settings, and one or more deceleration settings associated with one or more operational modes.

143. The method of aspect 142, wherein the one or more operational modes comprise a normal mode and an advanced mode.

144. The method of aspect 143, wherein the advanced mode provides a higher acceleration force, a higher deceleration force (braking power), and/or a faster rotation timing compared to the normal mode.

145. The method of aspects 128 and 130, wherein the plurality of different motor control parameters are associated with a plurality of different predefined electrical signals.

146. The method of aspect 145, wherein the plurality of different predefined electrical signals are associated with a plurality of predefined user inputs to the motor.

147. The method of aspect 146, wherein the plurality of predefined user inputs comprise (i) a speed of rotation, (ii) a direction of rotation, (iii) a rotation sequence, (iv) a number of rotation turns, and/or (v) a rotational position of the motor.

148. The method of aspect 146, wherein the plurality of different motor control parameters and the plurality of predefined user inputs are provided in a look-up table.

149. The method of aspect 146, further comprising: (1) comparing the electrical signal to the plurality of different predefined electrical signals, and (2) selecting the motor control parameter from the plurality of different motor control parameters when the electrical signal matches a predefined electrical signal that is associated with the selected motor control parameter.

150. The method of aspect 120, wherein selecting the motor control parameter further comprises: activating a mode that allows a value of the motor control parameter to be adjusted.

151. The method of aspects 130 and 150, further comprising: adjusting the selected motor control parameter to a desired value after the motor control parameter is selected from the plurality of different motor control parameters.

152. The method of aspect 151, wherein adjusting the selected motor control parameter to the desired value comprises calculating the desired value based on (i) a maximum value of the selected motor control parameter, (ii) a maximum output value of the motor, and (iii) a present output value of the motor.

153. The method of aspect 152, wherein the maximum output value and the present output value of the motor are associated with a speed, acceleration, rotating timing, and/or torque of the motor.

154. The method of aspects 127 and 152, wherein the present output value of the motor is obtained from the electrical signal.

155. The method of aspect 152, wherein a ratio of the desired value to the maximum value of the selected motor control parameter is proportional to a ratio of the present output value to the maximum output value of the motor.

156. The method of aspects 120 and 130, further comprising: providing a driving signal for driving the motor to generate an audio signal when the motor control parameter is selected from the plurality of different motor control parameters.

157. The method of aspect 156, wherein the audio signal is generated at a predetermined audio frequency and/or for a predetermined length of time.

158. The method of aspect 156, wherein the audio signal comprises a predetermined sequence of sounds spaced apart at a same or different time intervals.

159. The method of aspects 120 and 130, further comprising: providing a driving signal for driving a set of visual indicators to generate a visual signal when the motor control parameter is selected from the plurality of different motor control parameters.

160. The method of aspect 159, wherein the set of visual indicators comprise a plurality of lighting elements.

161. The method of aspect 159, wherein the visual signal is generated at a predetermined frequency and/or for a predetermined length of time.

162. The method of aspect 159, wherein the visual signal comprises a predetermined sequence of light flashes spaced apart at a same or different time intervals.

163. The method of aspects 120 and 130, further comprising: providing a driving signal for driving the motor to generate a vibration signal when the motor control parameter is selected from the plurality of different motor control parameters.

164. The method of aspect 163, wherein the vibration signal is indicative that the motor control parameter is successfully selected.

165. The method of aspect 163, wherein the motor is configured to vibrate at a predefined frequency and/or for a predetermined length of time.

166. The method of aspect 163, wherein the motor is configured to vibrate in a predefined sequence of vibrations spaced apart at a same or different time intervals.

167. The method of aspects 120 and 130, further comprising: providing a driving signal for driving the motor to generate a rotation signal when the motor control parameter is selected from the plurality of different motor control parameters.

168. The method of aspect 167, wherein the rotation signal is indicative that the motor control parameter is successfully selected.

169. The method of aspect 167, wherein the motor is configured to rotate for a predetermined number of turns, in a predetermined direction, and/or to a predetermined position.

170. The method of aspect 167, wherein the motor is configured to rotate in a predefined sequence spaced apart at a same or different time intervals.

171. The method of aspect 120, further comprising: providing a first driving signal for driving the motor to generate a first indicator signal when the motor control parameter is successfully selected.

172. The method of aspect 171, further comprising: providing a second driving signal for driving the motor to generate a second indicator signal when the motor control parameter is not successfully selected.

173. The method of aspect 172, wherein the first indicator signal is different from the second indicator signal.

174. The method of aspect 173, wherein the first indicator signal and the second indicator signal are selected from the group consisting of: (1) audio signals, (2) visual signals, (3) vibration signals, and (4) motor rotational signals.

175. A propulsion system comprising:

a motor configured to output a propulsion force; and

a motor controller electrically connected to the motor and configured to control the motor to output the propulsion force based on a selected motor control parameter,

wherein the motor control parameter is selected based on an operation of the motor when the motor is not outputting the propulsion force.

**Claims**

1. A method for controlling a motor, comprising:

    operating the motor to generate an electrical signal; and
    outputting the electrical signal from the motor to one or more processors, wherein the electrical signal is configured to be used by the one or more processors as an input for selecting a motor control parameter from a plurality of different motor control parameters.

2. The method of claim 1, wherein operating the motor to generate the electrical signal comprises manually rotating the motor without the motor being powered on.

3. The method of claim 1, wherein operating the motor to generate the electrical signal comprises manually rotating the motor with the motor being powered on, preferably wherein the motor is powered by an electric current provided via the one or more processors.

4. The method of claim 1, wherein the electrical signal is generated at a phase end of the motor, and output from the phase end to the one or more processors, or
wherein the electrical signal is indicative of a counter electromotive force (EMF) generated by the operation of the motor.

5. The method of claim 1, wherein the plurality of different motor control parameters are associated with a plurality of different ways of controlling the motor.

6. The method of claim 1, wherein operating the motor to generate the electrical signal comprises manually rotating the motor,
wherein the motor is configured to be manually rotated (i) in different directions, (ii) at different speeds, (iii) in different rotation sequences, (iv) having different number of turns, and/or (v) to different rotational positions, preferably wherein each one of the plurality of different motor control parameters is associated with a unique manner of operating the motor based on at least one of (i)-(v).

7. The method of claim 1, wherein the plurality of different motor control parameters are associated with and selected using a plurality of different user inputs, preferably wherein the plurality of different user inputs comprise a user's manual rotation of the motor (1) in different directions and/or (2) for different number of turns.

8. The method of claim 1, wherein the plurality of different motor control parameters comprise instructions for controlling a (i) a direction of rotation, (ii) a rotation timing, (iii) an acceleration, and/or (iv) a deceleration of the motor, (v) a normal phase-change timing, (vi) an advanced phase-change timing, and/or (vii) a voluntary deceleration of the motor.

9. The method of claim 1, wherein the plurality of different motor control parameters are associated with a plurality of different predefined electrical signals.

10. The method of claim 1, wherein selecting the motor control parameter further comprises:

    activating a mode that allows a value of the motor control parameter to be adjusted, preferably
    further comprising: adjusting the selected motor control parameter to a desired value after the motor control parameter is selected from the plurality of different motor control parameters.

11. The method of claim 1, further comprising: providing a driving signal for driving the motor to generate an audio signal when the motor control parameter is selected from the plurality of different motor control parameters.

12. The method of claim 1, further comprising: providing a driving signal for driving a set of visual indicators to generate a visual signal when the motor control parameter is selected from the plurality of different motor control parameters.

13. The method of claim 1, further comprising: providing a driving signal for driving the motor to generate a vibration signal when the motor control parameter is selected from the plurality of different motor control parameters, or further comprising: providing a driving signal for driving the motor to generate a rotation signal when the motor control parameter is selected from the plurality of different motor control parameters.

14. The method of claim 1, further comprising: providing a first driving signal for driving the motor to generate a first indicator signal when the motor control parameter is successfully selected, preferably further comprising: providing a second driving signal for driving the motor to generate a second indicator signal when the motor control parameter is not successfully selected.

15. A system comprising:
    a motor configured to generate an electrical signal when the motor is operated; and one or more processors individually or collectively configured to control the motor, wherein the motor is configured to output the electrical signal to the one or more processors, and wherein the electrical signal is configured to be used by the one or more processors as an input for selecting a motor control parameter from a plurality of different motor control parameters.

Movable object
100

Motor controller
102

Motor
104

FIG. 1

```
┌─────────────┐  User-input   ┌─────────────┐  Generated   ┌──────────────────┐
│    User     │  rotation 208 │    Motor    │  EMF 210     │ Motor controller │
│     206     │──────────────▶│     204     │─────────────▶│       202        │
└─────────────┘               └─────────────┘              └──────────────────┘
                                     ▲
                                     ┊
                                     ┊     Selected motor
                                     ┊    control parameter
                                     ┊          212
                                     └ ─ ─ ─ ─ ─ ─ ─ ─ ─ ─ ─ ─ ┘
```

## Part A

```
┌──────────────────┐  Motor control signal  ┌─────────────┐  Motor output
│ Motor controller │         214            │    Motor    │      216
│       202        │───────────────────────▶│     204     │──────────────▶
└──────────────────┘                        └─────────────┘
```

## Part B

# FIG. 2

FIG. 3

EP 3 904 205 A1

**Part A**

User **406**

User-input rotation 408-1

Motor **404**

Counter EMF (V)

Generated EMF 410-1

A1

Electrical angle (rad)

f1

**Part B**

User **406**

User-input rotation 408-2

Motor **404**

Counter EMF (V)

Generated EMF 410-2

A2

Electrical angle (rad)

f2

**Part C**

User **606**

User-input rotation 408-3

Motor **404**

Counter EMF (V)

Generated EMF 410-3

A3

Electrical angle (rad)

f3

——— Motor control parameter 412-1

·········· Motor control parameter 412-2

– ·· – Motor control parameter 412-3

**Part D**

Counter EMF (V)

Electrical angle (rad)

**FIG. 4**

EP 3 904 205 A1

FIG. 5

Part A

Part B

FIG. 6

FIG. 7

"Locked" state
(motor torque)

Motor
804

Motor controller
802

Reference current I

Power source
813

Part A

User
806

User-input
rotation 808

Selected motor control
parameter 812

Generated
EMF 810

Motor
804

ΔI

Motor controller
802

Reference current I

Power source
813

Part B

FIG. 8

FIG. 9

FIG. 10

Motor controller 1102

Generated EMF 1110

Selected motor control parameter 1112

Driving signal 1114

Motor 1104

User-input rotation 1108

Indicator signal 1116

User 1106

FIG. 11

FIG. 12

Propeller blades
1314

Motor output
1312

| Power source 1306 | → Power 1308 → | Motor controller 1302 | → Motor control signal 1310 → | Motor 1304 |

FIG. 13

FIG. 14

Europäisches
Patentamt

European
Patent Office

Office européen
des brevets

## EUROPEAN SEARCH REPORT

Application Number

EP 21 18 1338

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2014/232311 A1 (HILL MARTIN [GB]) 21 August 2014 (2014-08-21) * paragraphs [0075], [0086] * | 1-15 | INV. B64C27/12 B64C13/04 B64C27/56 H02P6/182 H02P27/08 H02P21/00 H02P23/00 H02P6/28 |
| A | WO 2015/148542 A1 (BOSE CORP [US]) 1 October 2015 (2015-10-01) * paragraphs [0032], [0039] * | 1-15 | |
| A | DE 10 2014 212554 A1 (SIEMENS AG [DE]) 31 December 2015 (2015-12-31) * paragraphs [0013] - [0015]; claims 1,5; figure 2 * | 1-15 | |
| A | WO 2016/074182 A1 (SZ DJI TECHNOLOGY CO LTD [CN]) 19 May 2016 (2016-05-19) * the whole document * | 1-15 | |

TECHNICAL FIELDS
SEARCHED     (IPC)

H02P
B64D
B64C

The present search report has been drawn up for all claims

| Place of search | Date of completion of the search | Examiner |
|---|---|---|
| Munich | 2 September 2021 | Schneider, Gernot |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**ANNEX TO THE EUROPEAN SEARCH REPORT
ON EUROPEAN PATENT APPLICATION NO.**

EP 21 18 1338

This annex lists the patent family members relating to the patent documents cited in the above-mentioned European search report.
The members are as contained in the European Patent Office EDP file on
The European Patent Office is in no way liable for these particulars which are merely given for the purpose of information.

02-09-2021

| Patent document cited in search report | Publication date | Patent family member(s) | Publication date |
|---|---|---|---|
| US 2014232311 A1 | 21-08-2014 | CN 105531917 A<br>EP 2959573 A2<br>KR 20150122701 A<br>TW 201448448 A<br>US 2014232311 A1<br>WO 2014130601 A2 | 27-04-2016<br>30-12-2015<br>02-11-2015<br>16-12-2014<br>21-08-2014<br>28-08-2014 |
| WO 2015148542 A1 | 01-10-2015 | US 2015265938 A1<br>WO 2015148542 A1 | 24-09-2015<br>01-10-2015 |
| DE 102014212554 A1 | 31-12-2015 | CN 106471729 A<br>DE 102014212554 A1<br>EP 3129793 A1<br>WO 2016001037 A1 | 01-03-2017<br>31-12-2015<br>15-02-2017<br>07-01-2016 |
| WO 2016074182 A1 | 19-05-2016 | CN 106061788 A<br>CN 111572356 A<br>JP 6165989 B2<br>JP 2017501075 A<br>US 2016244176 A1<br>US 2017334570 A1<br>US 2018079518 A1<br>US 2019168885 A1<br>US 2020223553 A1<br>WO 2016074182 A1 | 26-10-2016<br>25-08-2020<br>19-07-2017<br>12-01-2017<br>25-08-2016<br>23-11-2017<br>22-03-2018<br>06-06-2019<br>16-07-2020<br>19-05-2016 |

EPO FORM P0459

For more details about this annex : see Official Journal of the European Patent Office, No. 12/82